# EUROPEAN PATENT SPECIFICATION

(11) **EP 2 095 727 B1**
(45) Date of publication and mention of the grant of the patent: **25.07.2012**
(21) Application number: 07849886.2
(22) Date of filing: 26.12.2007
(51) Int. Cl.: A23L 2/52, A23L 2/38, A23L 1/30, A23L 1/305, A23F 3/16

(54) **PACKED DRINK**
VERPACKTES GETRÄNK
BOISSON CONDITIONNÉE

(30) Priority: 27.12.2006 JP 2006353186; 27.12.2006 JP 2006353189; 20.12.2007 JP 2007328993; 20.12.2007 JP 2007328992
(43) Date of publication of application: 02.09.2009
(73) Proprietor: Kao Corporation, Chuo-Ku Tokyo 103-8210 (JP)
(72) Inventor: FUKUDA, Masahiro, Tokyo 131-8501 (JP); TAKAHASHI, Hirokazu, Tokyo 131-8501 (JP); KUSAKA, Ryo, Tokyo 1318501 (JP); ITAYA, Eri, Tokyo 131-8501 (JP)
(74) Representative: HOFFMANN EITLE
(86) International application number: PCT/JP2007/001467
(87) International publication number: WO 2008/081582

(56) References cited:
- WO-A2-2005/011401
- JP-A- 2005 058 210
- JP-A- 2005 058 211
- JP-A- 2005 160 368
- JP-A- 2005 176 606
- JP-A- 2005 176 666
- JP-A- 2006 122 004
- JP-A- 2006 129 738
- JP-A- 2006 158 379
- JP-A- 2006 166 770
- JP-A- 2006 166 771
- JP-A- 2006 191 924
- JP-A- 2006 288 383
- US-A- 3 952 115

## Description

### Field of the Invention

This invention relates to a packaged beverage containing a high concentration of non-polymer catechins and a sweetener, and being fortified with amino acids.

### Background of the Invention

Catechins are reported to have a cholesterol-increase-suppressing effect and an amylase-activity-inhibiting effect and the like (e.g., Patent Documents 1 and 2). For such physiological effects to materialize, it is necessary for an adult to drink 4 to 5 cups of tea a day. Therefore, there has been a demand for a technology making it possible to incorporate a high concentration of catechins in a beverage, so that a large amount of catechins may be ingested more conveniently. As an example, there is a method according to which catechins are added in a dissolved form to a beverage by using a concentrate of green tea extract (e.g., Patent Documents 3 to 5).

Beverages containing BCAA which are essential amino acids, such as valine, leucine and isoleucine, are now available commercially, with the aim of maintaining muscles for healthy body (e.g., "AMINO-VALUE" (registered trademark); Otsuka Pharmaceutical Co., Ltd.). In addition, beverages fortified with 17 kinds of amino acids and having a function to replenish BCAA after exercise and to permit smooth recovery of muscular fatigue are also available on the market (e.g., "VAAM" (registered trademark); Meiji Dairies Corporation). As such, there exist reports related to beverages and technologies that are fortified with amino acid, known as a biogenic substance (e.g., Patent Documents 6 and 7).

[Patent Document 1] JP-A-03-168046
[Patent Document 2] JP-A-10-004919
[Patent Document 3] JP-A-2002-238518
[Patent Document 4] JP-A-2004-129662
[Patent Document 5] JP-A-2004-159641
[Patent Document 6] JP-A-05-161480
[Patent Document 7] JP-A-2001-000145
JP 2006-122004 A refers to packaged beverage containing from 0.03 to 1.0 wt.-% of non-polymer catechins, wherein the packaged beverage comprises a low caffeine green tea extract. The packaged beverage may have a pH of from 2 to 6, and may represent a packaged non-tea beverage. Furthermore, it may comprise 0.0001 to 20 wt.-% of a sweetener. Preferably the amount of non-polymer catechins is from 0.04 to 0.5 wt.-%. Furthermore, the content of gallates in the low caffeine green tea extract is preferably from 45 to 100 wt.-% of the whole non-polymer catechins.

### Disclosure of the Invention

The present invention provides a packaged beverage, containing:
(A) from 0.06 to 0.5 % by mass of non-polymer catechins;
(B) from 0.1 to 5.0 % by mass of at least one amino acid selected from L-isoleucine, L-leucine, L-valine, L-threonine, DL-methionine, L-methiocine. L-histidine, L-phenylalanine, L-lysine, L-tryptophan, L-aspartic acid, L-glutamic acid, L-alanine, DL-alanine, glycine, L-asparagine, L-glutamine, L-arginine, L-serine, L-tyrosine, L-cystine and L-proline, or a salt thereof;and
(C) from 0.01 to 20 % by mass of a sweetener which comprises at least one sweetener selected from fructose, glucose, sucrose, glucofructose syrup and fructoglucose syrup,
   • Wherein (G) a percentage of gallate bodies in the non-polymer catechins is from 5 to 55 % by mass, and pH is from 2.5 to 5.1.

### Modes for Carrying out the Invention

The present invention is to provide a method that can manifest the physiological effects of catechins and can also facilitate the intake of an amino acid by mixing the amino acids in a packaged beverage containing the non-polymer catechins in high concentration.

A beverage making combined use of an amino acid and a sweetener as defined above is generally prone to discoloration and is not suited for long-term storage. The present inventor has, however, found that a packaged beverage, which retains the inherent taste of the beverage and is excellent for long-term storage despite its inclusion of a sweetener, can be obtained when an amino acid as defined above and a sweetener as defined above are mixed in predetermined amounts in high-concentration non-polymer catechins, the percenatage of gallate bodies in the non-polymer catechins is adjusted, and further, its pH is adjusted to a specific range. The present inventor has also found that the stability of the taste of a beverage is further improved when the percentage of non-epi-bodies in the non-polymer catechins is adjusted.

According to the present invention, it is possible to provide a packaged beverage containing non-polymer catechins in high concentration, which makes it possible to take an amino acid at the same time and is good in the stability of its taste despite its inclusion of a sweetener as defined above.

The term "(A) non-polymer catechins" as used herein is a generic term, which collectively encompasses non-epicatechins (which may hereinafter be called "non-epi bodies") such as catechin, gallocatechin, catechin gallate and gallocatechin gallate, and epicatechins (which may hereinafter be called "epi bodies") such as epicatechin, epigallocatechin, epicatechingallate and epigallocatechingallate. The concentration of non-polymer catechins is defined based on the total amount of the above-described eight non-polymer catechins in total.

The packaged beverage according to the present invention contains non-polymer catechins at from 0.06 to 0.5 % by mass, preferably from 0.07 to 0.4 % by mass, more preferably from 0.08 to 0.3 % by mass, even more preferably from 0.09 to 0.2 % by mass. Insofar as non-polymer catechins fall within this range, a great deal of non-polymer catechins can be readily ingested so that the physiological effects of non-polymer catechins can be expected. A content of non-polymer catechins of 0.06 % by mass or higher provides the taste with good stability, while a content of non-polymer catechins of 0.5 % by mass or lower leads to a good taste.

The non-epi-bodies are practically not found in the natural world, and are formed by thermal denaturation of the epi-bodies. The percentage ([(F)/(A)] × 100) of the non-epi-bodies (F) of non-polymer catechins in the non-polymer catechins (A) is preferably from 5 to 25 % by mass, more preferably from 8 to 20 % by mass, more preferably from 8 to 18 % by mass, even more preferably from 10 to 15 % by mass from the viewpoints of taste and the storage stability of the non-polymer catechins.

The non-polymer catechins in the packaged beverage according to the present invention include gallate bodies consisting of epigallocatechin gallate, gallocatechin gallate, epicatechin gallate and catechin gallate; and non-gallate bodies consisting of epigallocatechin, gallocatechin, epicatechin and catechin. Because the gallate bodies are strong in bitterness, the percentage ([(G)/(A)] × 100) of the gallate bodies (G) of non-polymer catechins in the non-polymer catechins (A) usable in the packaged beverage according to the present invention is from 5 to 55 % by mass. From the viewpoints of the stability of the beverage and the suppression of bitterness, its lower limit may be preferably 8 % by mass, more preferably 10 % by mass, more preferably 15 % by mass, even more preferably 20 % by mass, while its upper limit may be preferably 52 % by mass, more preferably 51 % by mass, more preferably 50 % by mass, more preferably 46 % by mass, more preferably 45 % by mass, even more preferably 40 % by mass.

The packaged beverage containing non-polymer catechins in high concentration in the present invention may preferably be one containing a purified product of green tea extract mixed therein. In the present invention, the concentration of non-polymer catechins can be adjusted, for example, by further mixing a green tea extract or a concentrate thereof in the purified product of green tea extract. Specifically, the purified product of green tea extract can be an aqueous solution of the purified product of green tea extract; or one obtained by mixing, in the purified product of green tea extract, a green tea extract or a concentrate thereof, a semi-fermented tea extract or a concentrate thereof, or a fermented tea extract or a concentrate thereof. The term "a concentrate of a tea extract" as used herein means one obtained with an increased concentration of non-polymer catechins by removing a portion of water from a solution extracted from tea leaves with hot water or a water-soluble organic solvent, and as its forms, various forms such as a solid, aqueous solution and slurry can be mentioned. As the concentrate of the tea extract, a concentrate of green tea extract or a concentrate of fermented tea (black tea) extract is preferred. Further, the term "tea extract" means one extracted with hot water or a water-soluble organic solvent from tea leaves selected from unfermented tea, semi-fermented tea or fermented tea and not subjected to any concentration or purification operation, and means a concept that embraces tea extracts therein.

The concentrate of green tea extract containing non-polymer catechins can be selected from commercial products such as "POLYPHENON" (Mitsui Norin Co., Ltd.), "TEAFURAN (ITO EN Co., LTD.), and "SUNPHENON" (Taiyo Kagaku Co., Ltd.).

As a purification method, there is, for example, a method that suspends a concentrate of green tea extract in water or a mixture (hereinafter called "an aqueous solution of organic solvent") of water and an organic solvent such as ethanol, removes the resulting precipitate, and then distillates off the solvent.
Preferred as the purified product of green tea extract, said purified product being for use in the present invention, is one obtained by subjecting, in addition to or in place of the above-mentioned precipitate removal treatment, a green tea extract or a concentrate thereof (hereinafter called "a green tea extract or the like") to treatment by one or more of the following methods.
(i) a method that adds at least one treatment material selected from activated carbon, acid clay or activated clay to the green tea extract or the like and conducts treatment.
(ii) a method that subjects the green tea extract or the like to tannase treatment.
(iii) a method that subjects the green tea extract or the like to treatment with a synthetic adsorbent.

In the purification of the green tea extract, it is preferred to add at least one treatment material selected from activated carbon, acid clay or activated clay and to conduct purification before suspending the green tea extract or the like in water or an aqueous solution of organic solvent and removing the resulting precipitate. It is more preferred to add activated carbon and acid clay or activated clay to conduct the treatment. No particular limitation is imposed on the order in which the green tea extract or the like is brought into contact with activated carbon, acid clay or activated clay. There can be mentioned, for example,
(1) a method that brings the green tea extract or the like into contact with activated carbon and acid clay or activated clay after dispersing or dissolving the green tea extract or the like in water or an aqueous solution of organic solvent,
(2) a method that brings a dispersion, in which activated carbon and acid clay or activated clay are dispersed in water or an aqueous solution of organic solvent, and the green tea extract or the like into contact with each other and conducts the treatment, and
(3) a method that subsequent to dispersion or dissolution of the green tea extract or the like in water or an aqueous solution of organic solvent, brings the dispersion or solution into contact with acid clay or activated clay and then with activated carbon, or into contact with activated carbon and then with acid clay or activated clay.
Among these, the method (1) or (3) is preferred. It is to be noted that a filtration step may be interposed between the respective steps in each of the methods (1) to (3) and subsequent to separation by filtration, the procedure may then move to the subsequent step.

As the organic solvent for use in the purification of the green tea extract, a water-soluble organic solvent is preferred. Examples include alcohols such as methanol and ethanol, ketones such as acetone, and esters such as ethyl acetate, with ethanol being preferred especially in view of use in beverages or foods. The water can be deionized water, tap water, natural water or the like, with deionized water being preferred especially from the standpoint of taste.
The mixing weight ratio of the organic solvent to the water may be set preferably at from 60/40 to 97/3, more preferably from 60/40 to 95/5, still more preferably from 85/15 to 95/5 from the standpoints of the extraction efficiency of non-polymer catechins, the purification efficiency of the green tea extract, and so on.

As the proportions of the green tea extract or the like and the water or the aqueous solution of organic solvent, the green tea extract (dry weight basis) can be added in a proportion of preferably from 10 to 40 weight parts, more preferably from 10 to 30 weight parts to 100 weight parts of the water or the aqueous solution of organic solvent to conduct the treatment, because the green tea extract can be efficiently treated.
For the contact treatment, it is preferred to include an aging time of from 10 to 180 minutes or so.
Such treatment can be conducted at from 10 to 60°C, preferably at from 10 to 50°C, more preferably from 10 to 40°C.

As the activated carbon for use in the contact treatment, a commercial product such as, for example, "ZN-50" (product of Hokuetsu Carbon Industry Co., Ltd.), "KURARAY COAL GLC", "KURARAY COAL PK-D" or "KURARAY COAL PW-D" (product of Kuraray Chemical K.K.), or "SHIROWASHI AW50", "SHIROWASHI A", "SHIROWASHI M" or "SHIROWASHI C" (product of Takeda Pharmaceutical Company Limited) can be used.
The pore volume of the activated carbon may be in a range of preferably from 0.01 to 0.8 mL/g, more preferably from 0.1 to 0.8 mL/g. Concerning the specific surface area, on the other hand, one having a specific surface area in a range of preferably from 800 to 1600 m²/g, more preferably from 900 to 1500 m²/g is preferred. It is to be noted that these physical values are those determined by the nitrogen adsorption method.

The activated carbon can be added preferably in a proportion of from 0.5 to 8 weight parts, more preferably from 0.5 to 3 weight parts to 100 weight parts of the water or the aqueous solution of organic solvent because of the purification efficiency of the green tea extract and smaller cake resistance in the filtration step.

The acid clay and activated clay for use in the contact treatment both contain, as general chemical components, SiO₂, Al₂O₃, Fe₂O₃, CaO, MgO, etc., and those having SiO₂/Al₂O₃ ratios of from 3 to 12, preferably from 4 to 9 are preferred.
Also preferred are those which have compositions containing from 2 to 5 % by mass of Fe₂O₃, from 0 to 1.5 % by mass of CaO and from 1 to 7 % by mass of MgO.

The specific surface areas of the acid clay and activated clay may preferably be from 50 to 350 m²/g, and their pHs (5 % by mass suspensions) may be preferably from 2.5 to 8, more preferably from 3.6 to 7. As the acid clay, for example, a commercial product such as "MIZUKA ACE #600" (product of Mizusawa Chemical Industries, Ltd.) can be used.

The ratio of the activated carbon to the acid clay or activated clay may be from 1 to 10 of the acid clay or activated clay to 1 of the activated carbon by weight, with the activated carbon:the acid clay or activated clay = 1:1 to 1:6 being preferred.

The acid clay or activated clay can be added in a proportion of preferably from 2.5 to 25 weight parts, more preferably from 2.5 to 15 weight parts to 100 weight parts of the water or aqueous solution of organic solvent. The addition of the acid clay or the like in a proportion greater than 2.5 weight parts leads to good efficiency for the purification of the green tea extract, while the addition of the acid clay or the like in a proportion smaller than 25 weight parts develops no production problem such as cake resistance in the filtration step.

Upon separation of the activated carbon or the like from the water or the aqueous solution of organic solvent, the temperature may be preferably from -15 to 78°C, more preferably from -5 to 40°C. Within this temperature range, the separation performance is good. As a separation method, a conventionally-known technology can be used. For example, the separation may be effected by passing the water or the aqueous solution of organic solvent through a column packed with a granular substance such as activated carbon, instead of a method such as so-called filter separation or centrifugal separation.

The non-polymer catechins for use in the present invention can be lowered in the percentage of the gallate bodies by subjecting the green tea extract or the like to tannase treatment. The tannase for use in the treatment can be any tannase insofar as it has activity to hydrolyze non-polymer catechin gallates. Specifically, tannase obtainable by culturing a tannase-producing fungus of the Aspergillus, Penicillium or Rhizopus genus can be used.
More preferred is tannase available from Aspergillus oryzae. As commercial products of enzymes having tannase activity, "PECTINASE PL AMANO" (product of Amano Enzyme Inc.), "HEMISELLULASE AMANO 90" (product of Amano Enzyme Inc.), "TANNASE KTFH" (product of Kikkoman Corporation), and the like can be used.

The enzyme, which has tannase activity and is to be used in the present invention, may preferably have an enzyme activity of from 500 to 100,000 U/g. An enzyme activity of 500 U/g or higher makes it possible to easily conduct the treatment in a time that industrially poses no problem, while an enzyme activity of 100,000 U/g or lower makes it possible to readily control the reaction system. It is to be noted that "1 Unit" indicates an amount of enzyme that hydrolyses 1 micromole of ester bonds, which are contained in tannic acid, in water of 30°C. Therefore, the term "having tannase activity" means to have activity to degrade tannin, and any desired enzyme can be used insofar as it has this activity.

Upon conducting this tannase treatment, the tannase may be added such that its amount falls within a range of preferably from 0.5 to 10 % by mass, more preferably from 1.0 to 10 % by mass relative to the non-polymer catechins in the green tea extract. The temperature of the tannase treatment may be preferably from 15 to 40°C at which its enzyme activity is available, with from 20 to 30°C being more preferred. This temperature should be maintained until the percentage of the gallate bodies falls within the above-described range. At the time of the tannase treatment, the pH may be preferably from 4 to 6 at which its enzyme activity is available, with from 4.5 to 6 being more preferred, and from 5 to 6 being still more preferred.
Subsequently, the temperature is raised as promptly as possible to from 45 to 95, preferably from 75 to 95°C such that the tannase is inactivated to terminate the reaction. By the inactivation treatment of the tannase, any subsequent reduction in the percentage of the gallate bodies can be avoided, thereby making it possible to obtain a purified product of green tea extract with intended percentage of the gallate bodies.
The tannase-treated product obtained as described above can be used as a purified product of green tea extract.

In the present invention, the green tea extract or the like can be purified further by treating it with a synthetic adsorbent. A synthetic adsorbent is generally an insoluble polymer of three-dimensionally-crosslinked structure, and is substantially free of functional groups such as ion-exchanging groups. As the synthetic adsorbent, it is preferred to use one having an ion exchange capacity of lower than 1 meq/g. Usable examples of such a synthetic adsorbent include commercial products such as styrene-based adsorbents such as "AMBERLITE XAD4, XAD16HP, XAD1180, XAD2000" (supplier: Rohm & Haas USA), "DIAION HP20, HP21" (products of Mitsubishi Chemical Corporation), "SEPABEADS SP850, SP825, SP700, SP70" (products of Mitsubishi Chemical Corporation), and "VPOC1062" (product of Bayer AG); modified styrene-based adsorbents with adsorptive capacity enhanced by nuclear substitution with bromine atoms, such as "SEPABEADS SP205, SP206, SP207" (products of Mitsubishi Chemical Corporation) ; methacrylic adsorbents such as "DIAION HP1MG, HP2MG" (products of Mitsubishi Chemical Corporation) ; phenol-based adsorbents such as "AMBERLITE XAD761" (product of Rohm & Haas, Inc.); acrylic adsorbents such as "AMBERLITE XAD7HP" (product of Rohm & Haas, Inc.); polyvinyl-based adsorbents such as "TOYOPEARL HW-40C" (product of TOSOH CORPORATION) ; and dextran-based adsorbents such as "SEPHADEX LH-20" (product of Pharmacia AB).

The matrix of the synthetic adsorbent may preferably be of the styrene base, methacrylic base, acrylic base or polyvinyl base, with a styrene base being preferred from the standpoint of separability between non-polymer catechins and caffeine.

As a manner of adsorbing the green tea extract or the like on the synthetic adsorbent in the present invention, it is possible to adopt a batch process that adds the synthetic adsorbent to the green tea extract or the like, stirs the mixture, and subsequent to adsorption, recovers the synthetic adsorbent by a filter operation; or a column process that performs adsorption treatment through continuous treatment by using a column packed with the synthetic adsorbent. The continuous treatment process by using column is preferred from the standpoint of productivity. The amount of the adsorbent to be used can be suitably determined depending on the kind of the tea extract or the like to be used, but can be, for example, 200 % by mass or smaller based on the weight (dry weight) of the green tea extract.

The column with the synthetic adsorbent packed therein may preferably be washed beforehand with a 95 % by mass aqueous solution of ethanol at SV (space velocity) = 0.5 to 10 [h⁻] under loading conditions of from 2 to 10 [v/v] as a loading ratio to the synthetic adsorbent to remove the raw monomer for the synthetic adsorbent and other impurities and the like. The adsorptive capacity for non-polymer catechins can be improved by a method that subsequently conducts washing with water at SV = 0.5 to 10 [h⁻] under loading conditions of from 1 to 60 [v/v] as a loading ratio to the synthetic adsorbent to remove ethanol and hence to replace the solution, in which the synthetic adsorbent is contained, with a water-based medium.

As conditions for loading the green tea extract or the like on the column packed with the synthetic adsorbent, it is preferred to load the green tea extract under loading conditions of a loading rate of SV (space velocity) = 0.5 to 10 [h⁻] and a loading ratio of from 0.5 to 20 [v/v] to the synthetic adsorbent. A loading rate of 10 [h⁻] or lower and a loading ratio of 20 [v/v] or smaller result in sufficient adsorption of the non-polymer catechins or the like on the synthetic adsorbent.

After the green tea extract or the like is loaded, non-polymer catechins are then eluted with an aqueous solution of organic solvent.
As the aqueous solution of organic solvent, a mixture of a water-soluble organic solvent and water is used. As the water-soluble organic solvent, organic solvents similar to those described above can be exemplified. Among them, ethanol is preferred from the viewpoint of use in beverages or foods. The concentration of the water-soluble organic solvent may be preferably from 5.0 to 50.0 % by mass, more preferably from 10.0 to 30.0 % by mass, even more preferably from 15.0 to 25.0 % by mass from the standpoint of the recovery rate of non-polymer catechins.

It is preferred to elute non-polymer catechins by loading the aqueous solution of organic solvent under conditions of a loading rate of SV (space velocity) = 2 to 10 [h⁻] and a loading ratio of from 1 to 30 [v/v]to the synthetic adsorbent. From the standpoints of purification efficiency and the recovery rate of non-polymer catechins, it is more preferred to conduct the elution under loading conditions of a loading rate of SV = 3 to 7 [h⁻] and a loading ratio of from 3 to 15 [v/v].

The content weight ratio ((H)/ (A)) of the caffeine (H) to the non-polymer catechins (A) in the packaged beverage according to the present invention may be preferably from 0.0001 to 0.16, more preferably from 0.001 to 0.15, more preferably from 0.01 to 0.14, more preferably from 0.02 to 0.14 % by mass, even more preferably from 0.05 to 0.13. A ratio of caffeine to non-polymer catechins of 0.0001 or greater makes it possible to retain the taste balance. A ratio of caffeine to non-polymer catechins of 0.16 or smaller, on the other hand, provides the beverage with good stability. The caffeine can be the caffeine naturally found in a green tea extract, flavor, fruit extract and any other ingredient(s) employed as ingredients, or can be caffeine added newly.

The amino acid (B) for use in the present invention is selected from L-isoleucine, L-leucine, L-valine, L-threonine, DL-methionine, L-methionine, L-histidine, L-phenylalanine, L-lysine, L-tryptophan, L-aspartic acid, L-glutamic acid, L-alanine, DL-alanine, glycine, L-asparagine, L-glutamine, L-arginine, L-serine, L-tyrosine, L-cystine and L-proline. Their salts include acid addition salts with inorganic acids (for example, hydrochloric acid, hydrobromic acid, sulfuric acid, phosphoric acid, nitric acid) or organic acids (for example, acetic acid, propionic acid, succinic acid, glycolic acid, lactic acid, malic acid, tartaric acid, citric acid, maleic acid, fumaric acid, methanesulfonic acid, benzenesulfonic acid, p-toluenesulfonic acid, ascorbic acid); salts with alkali metals (for example, sodium, potassium), alkaline earth metals (for example, calcium) or inorganic bases such as ammonium; and salts with organic bases such as amines (for example, methylamine, diethylamine, triethylamine, ethylenediamine), alkanolamines (for example, monoethanolamine, diethanolamine, triethanolamine). Among these amino acid salts, the hydrochlorides and alkali metal salts are preferred.

Two or more of these amino acids and salts can be employed in combination as the amino acid or its salt (B) for use in the present invention. The total amount of the amino acid(s) or salt(s) thereof in the packaged beverage according to the present invention is from 0.01 to 5.0 % by mass, but can be preferably from 0.1 to 4.0 % by mass, more preferably from 0.1 to 3.0 % by mass, still more preferably from 0.2 to 2.0 % by mass. When the total amount of the amino acid(s) or salt (s) thereof is 0.01 % by mass or greater, the effects of the amino acid(s) can be expected. With a total amount of 5.0 % by mass or smaller, it is possible to suppress a Maillard reaction with a carbohydrate employed as a sweetener.

In the packaged beverage according to the present invention, the sweetener (C) is contained at from 0.01 to 20% by mass, preferably at from 0.01 to 15 % by mass, more preferably from 0.01 to 10 % by mass in total in the packaged beverage according to the present invention. It is to be noted that these sweeteners include those contained in the tea extract.

If the sweetener is too little, the packaged beverage according to the present invention has substantially no sweetness so that its sweetness can be hardly balanced with its sourness or saltiness. Therefore, the degree of its sweetness may preferably be preferably at least 2, more preferably from 2 to 7 when sucrose is assumed to have a sweetness degree of 1 (References: JIS Z8144, Sensory Evaluation Analysis-Terms, No. 3011, Sweetness; JIS Z9080, Sensory Evaluation Analysis-Methods, Testing Method; Beverage Term Dictionary, 4-2 Classification of Sweetness Degrees, Material 11 (Beverage Japan, Inc.); Property Grading Test mAG Test, ISO 6564-1985(E), "Sensory Analysis - Methodology-Flavour profile method", etc.).

Naturally-occurring carbohydrate sweeteners include monosaccharides, oligosaccharides, complex polysaccharides, and mixtures thereof. Among these,
one or more carbohydrates selected from glucose, sucrose, fructose, glucofructose syrup and fructoglucose syrup are included in the packaged beverage according to the present invention.

The content of glucose in the packaged beverage according to the present invention may be preferably from 0.0001 to 20 % by mass, more preferably from 0.001 to 15 % by mass, even more preferably from 0.01 to 10 % by mass.
The content of fructose in the packaged beverage according to the present invention may be preferably from 0.0001 to 20 % by mass, more preferably from 0.001 to 15 % by mass, even more preferably from 0.01 to 10 % by mass. Further, the content of glucofructose syrup or fructoglucose syrup may be preferably from 0.01 to 7 % by mass, more preferably from 0.1 to 6 % by mass, even more preferably from 1.0 to 5 % by mass.

As the oligosaccharides, sucrose, malt dextrin, corn syrup, high-fructose corn syrup, agape extract, maple syrup, sugarcane, honey and the like can be mentioned, for example. Among these, sucrose is preferred. As forms of sucrose, there are granulated sugar, liquid sugar, white superior soft sugar, etc.
The content of sucrose in the packaged beverage according to the present invention may be preferably from 0.001 to 20 % by mass, more preferably from 0.01 to 15 % by mass, even more preferably from 0.1 to 10 % by mass.

A preferred example of complex polysaccharide is malt dextrin. In addition, polyhydric alcohols, for example, glycerols can also be used in the present invention. Glycerol can be used, for example, at from 0.1 to 15 % by mass, preferably at from 0.2 to 10 % by mass in the packaged beverage according to the present invention.

As the sugar alcohols in the sweeteners usable in the packaged beverage according to the present invention, erythritol, sorbitol, xylitol, trehalose, maltitol, lactitol, palatinose, mannitol and the like can be mentioned. Among these, erythritol is preferred as it has no calorific value. The content of such a sugar alcohol may be preferably from 0.01 to 15% by mass.

Among the sweeteners usable in the packaged beverage according to the present invention, the artificial sweeteners include high-sweetness sweeteners such as aspartame, sucralose, saccharin, cyclamate, acesulfame-K, L-aspartyl-L-phenylalanine lower alkyl ester, L-aspartyl-D-alanine amide, L-aspartyl-D-serine amide, L-aspartyl-hydroxymethylalkanamide, L-aspartyl-1-hydroxyethylalkanamide and sucralose, glycyrrhizin, and synthetic alkoxyaromatic compounds. Further, thaumatin, stevioside and other natural-source sweeteners are also usable. The

In the packaged beverage according to the present invention, sodium (D) and/or potassium (E) can be incorporated at from 0.001 to 0.5 % by mass and from 0.001 to 0.2 % by mass, respectively, as electrolyte (s).
The total concentration of sodium and potassium may preferably be from 0.001 to 0.5 % by mass. These sodium and potassium include those originated from amino acid(s) and a sour seasoning.

As the sodium for use in the present invention, one or more of readily-available sodium salts such as 26 sodium ascorbate, sodium chloride, sodium carbonate, sodium hydrogencarbonate, sodium citrate, sodium phosphate, sodium hydrogenphosphate, sodium tartrate, sodium benzoate and the like, and mixtures thereof can be mixed. The sodium includes that originated from an added fruit extract or that contained as an ingredient in tea. From the viewpoint of the stability of the beverage, the content of sodium in the packaged beverage according to the present invention may be preferably from 0.001 to 0.5 % by mass, more preferably from 0.002 to 0.4 % by mass, even more preferably from 0.003 to 0.2 % by mass. At a sodium concentration of 0.5 % by mass or lower, the stability of the beverage is good.

As the potassium for use in the present invention, a compound other than the potassium contained in the tea extract can be added to increase its concentrate. For example, one or more of potassium salts such as potassium chloride, potassium carbonate, potassium sulfate, potassium acetate, potassium hydrogencarbonate, potassium citrate, potassium phosphate, potassium hydrogenphosphate, potassium tartrate, potassium solbate and mixtures thereof may be mixed. The potassium includes that originated from an added fruit extract or flavoring. From the viewpoint of stability, the content of potassium in the packaged beverage according to the present invention may be preferably from 0.001 to 0.2 % by mass, more preferably from 0.002 to 0.15 % by mass, even more preferably from 0.003 to 0.12 % by mass. A potassium concentration of 0.2 % by mass or lower does not affect the color tone much during long-term high-temperature storage.

In the packaged beverage according to the present invention, a sour seasoning can be incorporated. The sour seasoning in the present invention can be one or more sour seasonings selected from ascorbic acid, citric acid, gluconic acid, succinic acid, tartaric acid, lactic acid, fumaric acid, phosphoric acid, malic acid, adipic acid and salts thereof. To obtain adequate sourness, it is preferred to use such an acid and its salt in combination although the single use of the acid can still provide a pH suitable for long-term storage. The salt can be, for example, a salt with an inorganic base or a salt with an organic base. Examples of the salt with the inorganic base include alkali metal salts (for example, the sodium salt and potassium salt) and ammonium salt. Examples of the salt with the organic base include amine salts (for example, the methylamine salt, diethylamine salt, triethylamine salt and ethylenediamine salt) and alkanolamine salts (for example, the monoethanolamine salt, diethanolamine salt and triethanolamine salts). Among these, alkali metals are preferred. Specifically, trisodium citrate, monopotassium citrate, tripotassium citrate, sodium gluconate, potassium gluconate, sodium tartrate, trisodium tartrate, potassium hydrogentartrate, sodium lactate, potassium lactate, sodium fumarate can be mentioned. Other sour seasonings include fruit extracts extracted from natural sources.

Such a sour seasoning may be contained preferably at from 0.01 to 0.7 % by mass, more preferably at from 0.02 to 0.6 % by mass in the packaged beverage according to the present invention. A sour seasoning concentration of 0.01 % by mass or higher can suppress bitterness and astringency, and allows to feel sourness.
A sour seasoning concentration of 0.7 % by mass or lower, on the other hand, provides a good taste. Further, inorganic acids and inorganic acid salts can also be used. These inorganic acids and inorganic acid salts include diammonium hydrogenphosphate, ammonium dihydrogenphosphate, dipotassium hydrogenphosphate, disodium hydrogenphosphate, sodium dihydrogenphosphate, trisodium metaphosphate and tripotassium phosphate. These inorganic acids and inorganic acid salts may be contained preferably at from 0.01 to 0.5 % by mass, more preferably at from 0.02 to 0.3 % by mass in the packaged beverage according to the present invention.

From the viewpoints of taste and storage stability, the pH of the packaged beverage according to the present invention is set in the range of from 2.5 to 5.1, and preferably from 2.8 to 5.0, more preferably from 3.0 to 4.5. Namely, a pH of 2.5 or higher maintains the amount of non-polymer catechins during long-term storage. A pH of 5.1 or lower, on the other hand, can retain its stability even during long-term storage. The pH can be adjusted with ascorbic acid or its salt, citric acid or the like to the above-describe range. By this pH adjustment, a beverage permitting long-term storage and having adequate sourness is obtained.

It is possible to mix one or more of flavorings (flavors) and fruit extracts (fruit juices) to the packaged beverage according to the present invention with a view to improving its taste. Natural or synthetic flavorings and fruit extracts can be used in the present invention. They can be selected from fruit juices, fruit flavors, plant flavors, and mixtures thereof. For example, a combination of a fruit juice with a tea flavor, preferably a green tea or black tea flavor is preferred. Preferred usable fruit extracts include apple, pear, lemon, lime, mandarin, grapefruit, cranberry, orange, strawberry, grape, kiwi, pineapple, passion fruit, mango, guava, raspberry, and cherry juices. Among these, more preferred are citrus juices (preferably, grapefruit, orange, lemon, lime and mandarin), mango juice, passion fruit juice, guava juice, and mixtures thereof. Preferred natural flavors include jasmine, chamomile, rose, peppermint, *Crataegus cuneata*, chrysanthemum, water caltrop, sugarcane, bracket fungus of the genus Fomes (*Fomes japonicus*), bamboo shoot, and the like.
Such a fruit extract may be contained preferably at from 0.001 to 20 % by mass, more preferably at from 0.002 to 10 % by mass in the packaged beverage according to the present invention. Still more preferred flavorings are citrus flavors including orange flavor, lemon flavor, lime flavor and grapefruit flavor. In addition to such citrus flavors, various other fruit flavors such as apple flavor, grape flavor, raspberry flavor, cranberry flavor, cherry flavor and pineapple flavor are also usable. These flavors can be derived from natural sources such as fruit extracts and balms, or can be synthesized.
The flavorings can also include blends of various flavors, for example, a blend of lemon and lime flavors and blends of citrus flavors and selected spices (typically, cola soft drink flavors). Such a flavoring can be mixed preferably at from 0.0001 to 5 % by mass, more preferably at from 0.001 to 3 % by mass to the packaged beverage according to the present invention.

In the packaged beverage according to the present invention, one or more vitamins can be incorporated further. As vitamins, vitamin A, vitamin B and vitamin E can be added preferably. Other vitamins such as vitamin D may also be added. As vitamin B, there can be mentioned one or more vitamin Bs selected from inositol, thiamine hydrochloride, thiamine nitrate, riboflavin, riboflavin 5'-phosphate sodium, niacin, nicotinamide, calcium pantothenate, pyridoxy hydrochloride, cyanocobalamin, folic acid and biotin. These vitamins can each be added preferably in an amount of at least 10 % by mass of its daily requirement (U.S. RDI Standards, described in US 2005/0003068: U.S. Reference Daily Intake) per package.

Minerals can also be incorporated in the packaged beverage according to the present invention. Preferred minerals are calcium, chromium, copper, fluorine, iodine, iron, magnesium, manganese, phosphorus, selenium, silicon, molybdenum, and zinc.
More preferred minerals are magnesium, phosphorus and iron.

In the packaged beverage according to the present invention, a cyclodextrin can also be used in combination to suppress the bitterness of non-polymer catechins. The cyclodextrin can be an α-cyclodextrin, a β-cyclodextrin or a γ-cyclodextrin.

In the packaged beverage according to the present invention, additives such as antioxidants, various esters, colors, emulsifiers, preservatives, seasoning agents, vegetable extracts, flower honey extracts, pH regulators and quality stabilizers may be mixed either singly or in combination , in addition to the ingredients originated from tea, as described above.

The packaged beverage according to the present invention can be formulated into a non-carbonated beverage depending on the preference. It can also be formulated into a carbonated beverage. Specifically, the provision of adequate bubbling property by carbonic acid gas makes it possible to suppress the bitterness of non-polymer catechins, and further, to give a soft feeling and a pleasant cooling feeling over an extended time. The packaged beverage according to the present invention can also be formulated into a tea-based beverage or a non-tea-based beverage. As tea-based beverages, there can be mentioned non-fermented tea beverages such as green tea beverage, semi-fermented tea beverages such as oolong tea beverages, and fermented tea beverages such as black tea beverages. The packaged beverage according to the present invention can also be formulated into a functional beverage, for example, a non-tea-based beverage such as an enhanced water, sports drink or near water.

The calorific value of the packaged beverage according to the present invention can be calculated based on 4 kcal/g for glucose, fructose and sucrose and 0 Kcal/g for erythritol contained in 100 mL of the beverage. The packaged beverage according to the present invention may preferably have a low calorific value of not greater than 40 kcal/240 mL, with from 2 to 35 kcal/240 mL being more preferred, and from 3 to 30 kcal/240 mL being still more preferred.

As a package usable for the packaged beverage according to the present invention, a package of a conventional form, such as a molded package made of polyethylene terephthalate as a principal component (a so-called PET bottle), a metal can, a paper package combined with metal foils or plastic films, a bottle or the like, can be provided. The term "packaged beverage" as used herein means one that can be taken without dilution.

The packaged beverage according to the present invention can be produced, for example, by filling the beverage in a package such as a metal can and, when heat sterilization is feasible, conducting heat sterilization under sterilization conditions prescribed in relevant regulations (in Japan, the Food Sanitation Act). For those which cannot be subjected to retort sterilization like PET bottles or paper packages, a process is adopted such that the beverage is sterilized beforehand at a high temperature for a short time under similar sterilization conditions as those described above, for example, by using a plate-type heat exchanger or the like, is cooled to a particular temperature, and is then filled in a package.
Under aseptic conditions, additional ingredients may be mixed to and filled in a beverage-filled package. It is also possible to conduct an operation such that subsequent to heat sterilization under acidic conditions, the pH of the beverage is caused to rise back to neutral under aseptic conditions or that subsequent to heat sterilization under neutral conditions, the pH of the beverage is caused to drop back to the acidic side under aseptic conditions.

### Examples

### Measurements of non-polymer catechins and caffeine

A high-performance liquid chromatograph (model: "SCL-10AVP") manufactured by Shimadzu Corporation was used. The chromatograph was fitted with a liquid chromatograph column packed with octadecyl-introduced silica gel, "L-Column, TM ODS" (4.6 mm in diameter x 250 mm; product of Chemicals Evaluation and Research Institute, Japan). A sample, which had been subjected to filtration through a membrane filter (0.8 µm) and then to dilution with distilled water, was measured at a column temperature of 35°C by the gradient elution method. A mobile phase, Solution A, was a solution containing acetic acid at 0.1 mol/L in distilled water, while another mobile phase, Solution B, was a solution containing acetic acid at 0.1 mol/L in acetonitrile. The measurement was conducted under the conditions of 20 µL sample injection volume and 280 nm UV detector wavelength (the concentrations of catechins and caffeine are generally expressed in terms of weight/volume % (%[w/v]), but their contents in each Example will be expressed in terms of % by mass by multiplying their concentrations with the amount of the solution).

### Quantitation of sodium

Atomic fluorescence spectroscopy (extraction with hydrochloric acid)
Each sample (5 g) was placed in 10 % by mass hydrochloric acid. The resulting solution was then brought to a predetermined volume with deionized water to provide a 1 % by mass hydrochloric acid solution, and its absorbance was measured.
Wavelength: 589.6 nm
Flame: acetylene-air

### Quantitation of potassium

Atomic fluorescence spectroscopy (extraction with hydrochloric acid)
Each sample (5 g) was placed in 10 % by mass hydrochloric acid. The resulting solution was then brought to a predetermined volume with deionized water to provide a 1 % by mass hydrochloric acid solution, and its absorbance was measured.

### Evaluation of taste

With respect to the beverages obtained in the respective Examples and Comparative Examples, a drinking test was performed by a panel of five trained assessors. In accordance with the following standards, the taste was assessed based on sweetness, sourness and bitterness.

### Evaluation standards

1: Excellent, 2: good, 3: average,
4: poor, 5: bad

### Storage test

Each prepared beverage was stored at 37°C for 4 weeks, and a change in the color tone of the beverage during its storage was visually graded by the panel of five trained assessors in accordance with the following standards. Further, its taste was also assessed.
A: Unchanged, B: slightly changed, C: changed,
D: significantly changed.

### Production Example 1

Production of a "purified product 1 of green tea extract containing non-polymer catechins"
A commercial concentrate (1,000 g) of green tea extract ("POLYPHENONE HG", Mitsui Norin Co., Ltd.) was suspended in a 95 % by mass aqueous solution of ethanol (9,000 g) under stirring conditions of 25°C and 200 r/min. After activated carbon ("KURARAY COAL GLC", product of Kuraray Chemical K.K. ; 200 g) and acid clay ("MIZKA ACE #600", product of Mizusawa Chemical Industries, Ltd.; 500 g) were charged, the resulting mixture was continuously stirred for about 10 minutes.
Still at 25°C, stirring was then continued for about 30 minutes. After the activated carbon, acid clay and precipitate were filtered off by No. 2 filter paper, the filtrate was filtered again through a 0.2 µm membrane filter. Finally, deionized water (200 g) was added to the filtrate, ethanol was distilled off at 40°C and 3.3 kPa to achieve vacuum concentration. An aliquot (750 g) of the concentrate was placed in a stainless steel vessel, the total amount was brought to 10,000 g with deionized water, and then, a 5 % by mass aqueous solution of sodium bicarbonate (30 g) was added to adjust its pH to 5.5. Under stirring conditions of 22°C and 150 r/min, a solution of "KIKKOMAN TANNASE KTFH" (Industrial Grade, 500 U/g minimum; 2.7 g) dissolved in deionized water (10.7 g) was then added. Upon elapsed time of 30 minutes at which the pH had dropped to 4.24, the enzyme reaction was terminated. The stainless steel vessel was next immersed in a hot bath of 95°C, and was held at 90°C for 10 minutes to completely inactivate the enzyme activity. After the stainless steel vessel was next cooled to 25°C, concentration processing was conducted to obtain a "purified product 1 of green tea extract containing non-polymer catechins". The non-polymer catechins amounted to 15.0 % by mass, and the percentage of non-polymer gallates was 45.1 % by mass.

### Production Example 2

Production of a "concentrate 2 of green tea extract containing non-polymer catechins"
Hot water of 88°C (4,500 g) was added to green tea leaves (produce of Kenya, large leaf variety; 300 g). After extraction for 60 minutes under stirring, coarse filtration was conducted through a 100-mesh screen. To remove fine powder from the tea extract, a centrifugal separation operation was then performed to obtain a "green tea extract" (3, 680 g). An aliquot of the green tea extract was then lyophilized to obtain a "concentrate 2 of green tea extract containing non-polymer catechins". The non-polymer catechins amounted to 32.8 % by mass, and the percentage of non-polymer gallates was 58.6 % by mass.

### Production Example 3

Production of a "purified product 3 of purified product of green tea extract containing non-polymer catechins"
The concentrate 2 of green tea extract containing non-polymer catechins was placed in a stainless steel vessel, and a 5 % by mass aqueous solution of sodium bicarbonate was added to adjust its pH to 5.5. Under stirring conditions of 22°C and 150 r/min, a solution (150 g) of "KIKKOMAN TANNASE KTFH" (Industrial Grade, 500 U/g minimum) added to deionized water at a concentration of 430 ppm based on the concentrate of green tea extract was then charged. Upon elapsed time of 55 minutes at which the pH had dropped to 4.24, the enzyme reaction was terminated. The stainless steel vessel was next immersed in a hot bath of 95°C, and was held at 90°C for 10 minutes to completely inactivate the enzyme activity. After the stainless steel vessel was next cooled to 25°C, concentration processing and lyophilization were conducted to obtain a "purified product 3 of green tea extract containing non-polymer catechins". The non-polymer catechins amounted to 30.0 % by mass, and the percentage of non-polymer gallates was 20.2 % by mass.

### Production Example 4

Production of a "purified product 4 of purified product of green tea extract containing non-polymer catechins"
A mixture of the "concentrate 2 of green tea extract containing non-polymer catechins" (25 g) and the "purified product 3 of green tea extract containing non-polymer catechins" (75 g) was suspended in a 95 % by mass aqueous solution of ethanol (900 g) under stirring conditions of 25°C and 200 r/min. After activated carbon "KURARAY COAL GLC" (20 g, product of Kuraray Chemical K.K.) and acid clay "MIZKA ACE #600" (50 g, product of Mizusawa Chemical Industries, Ltd.) were charged, the resulting mixture was continuously stirred for about 10 minutes. Still at 25°C, stirring was then continued for about 30 minutes. After the activated carbon, acid clay and precipitate were then filtered off by No. 2 filter paper, the filtrate was filtered again through a 0.2 µm membrane filter. Finally, deionized water (200 g) was added to the filtrate, ethanol was distilled off at 40°C and 3.3 kPa to achieve reduced-pressure concentration, and a "purified product 4 of green tea extract containing non-polymer catechins" was obtained. The non-polymer catechins amounted to 30.8 % by mass, and the rate of non-polymer gallates was 30.4 % by mass.

### Production Example 5

Production of a "purified product 5 of purified product of green tea extract containing non-polymer catechins" The "purified product 3 of green tea extract containing non-polymer catechins" (85 g) was dissolved under stirring at 25°C for 30 minutes in deionized water (8,415 g) (tannase-treated solution). A synthetic adsorbent "SP-70" (product of Mitsubishi Chemical Corporation; 2,048 mL) was packed in a stainless steel column 1 (110 mm inner diameter x 230 mm height, volume: 2,185 mL). The tannase-treated solution (8,200 g, 4 volumes relative to the synthetic adsorbent) was loaded at SV = 1 (h⁻¹) on the column 1 and the outflow was discarded. Subsequent to washing with water, a 20 % by mass aqueous solution of ethanol (10,240 mL, 5 volumes relative to the synthetic adsorbent) was loaded at SV = 1 (h⁻¹) to obtain a "resin-treated product 1" (pH 4.58). Granular activated carbon "TAIKO SGP" (product of Futamura Chemical Co. , Ltd.; 8.5 g) was then packed in a stainless steel column 2 (22 mm inner diameter x 145 mm height, volume: 55.1 mL), and the "resin-treated product 1" was loaded at SV = 1 (h⁻¹) on the column 2. Concentration processing and lyophilization were then conducted to obtain a "purified product 5 of green tea extract containing non-polymer catechins". The non-polymer catechins amounted to 77.6 % by mass, and the percentage of non-polymer gallate bodies was 20.2 % by mass.

### Example 1

The "purified product 1 of green tea extract containing non-polymer catechins" (5.3 g), the "concentrate 2 of green tea extract containing non-polymer catechins" (2.2 g), L-valine (1.0 g), L-leucine (2.0 g) and L-isoleucine (1.0 g) were dissolved in water. Anhydrous crystalline fructose, erythritol, L-ascorbic acid and a green tea flavor were then added, and the total amount was brought to 1,000 g. Subsequent to mixing, the beverage was subjected to UHT sterilization and was then filled in a PET bottle.
The composition of the packaged green tea beverage and the results of its taste evaluation and stability are shown in Table 1.

### Example 2

A packaged green tea beverage was produced in a similar manner as in Example 1 except that L-threonine (1.0 g) was added further as an amino acid. Its composition and the results of its taste evaluation and stability are shown in Table 1.

### Example 3

A packaged green tea beverage was produced in a similar manner as in Example 1 except that L-methionine (1.0 g) was added further as an amino acid.
Its composition and the results of its taste evaluation and stability are shown in Table 1.

### Example 4

A packaged green tea beverage was produced in a similar manner as in Example 1 except that L-histidine (1.0 g) was added further as an amino acid. Its composition and the results of its taste evaluation and stability are shown in Table 1.

### Example 5

A packaged green tea beverage was produced in a similar manner as in Example 1 except that L-phenylalanine (1.0 g) was added further as an amino acid. Its composition and the results of its taste evaluation and stability are shown in Table 1.

### Example 6

A packaged green tea beverage was produced in a similar manner as in Example 1 except that L-lysine (1.0 g) was added further as an amino acid. Its composition and the results of its taste evaluation and stability are shown in Table 1.

### Example 7

A packaged green tea beverage was produced in a similar manner as in Example 1 except that the "purified product 5 of green tea extract containing non-polymer catechins" (1.0 g) was used in place of the "purified product 1 of green tea extract containing non-polymer catechins". Its composition and the results of its taste evaluation and stability are shown in Table 1.

### Example 8

A packaged black tea beverage was produced in a similar manner as in Example 1 except that the used amount of the "purified product 1 of green tea extract containing non-polymer catechins" was changed to 8.5 g and a powder of black tea extract (0.5 g, product of India) was used in place of the "concentrate 2 of green tea extract containing non-polymer catechins".
Its composition and the results of its taste evaluation and stability are shown in Table 1.

### Example 9

A lemon-flavored, packaged black tea beverage was produced in a similar manner as in Example 8 except that citric acid anhydride (1 g) was used in place of L-ascorbic acid and a lemon flavor (1 g) was added further. Its composition and the results of its taste evaluation and stability are shown in Table 1.

### Example 10

A packaged black tea beverage was produced in a similar manner as in Example 8 except that the "purified product 4 of green tea extract containing non-polymer catechins" (4.2 g) was used in place of the "purified product 1 of green tea extract containing non-polymer catechins". Its composition and the results of its taste evaluation and stability are shown in Table 1.

### Example 11

A packaged black tea beverage was produced in a similar manner as in Example 8 except that the "purified product 5 of green tea extract containing non-polymer catechins" (1.6 g) was used in place of the "purified product 1 of green tea extract containing non-polymer catechins". Its composition and the results of its taste evaluation and stability are shown in Table 1.

### Comparative Example 1

A packaged beverage was produced in a similar manner as in Example 1 except that the "purified product 1 of green tea extract containing non-polymer catechins" was not used. Its composition and the results of its taste evaluation and stability are shown in Table 1.

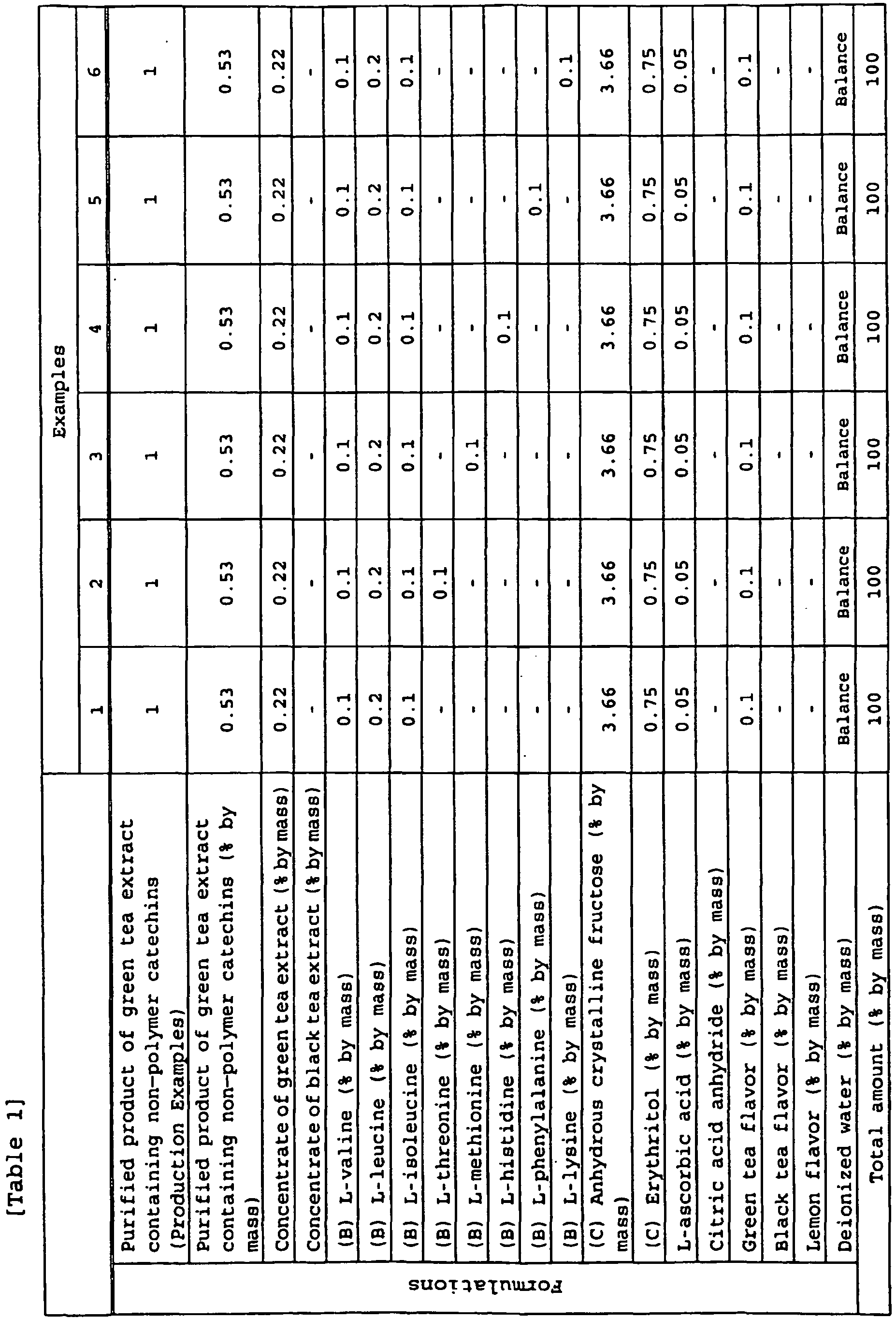

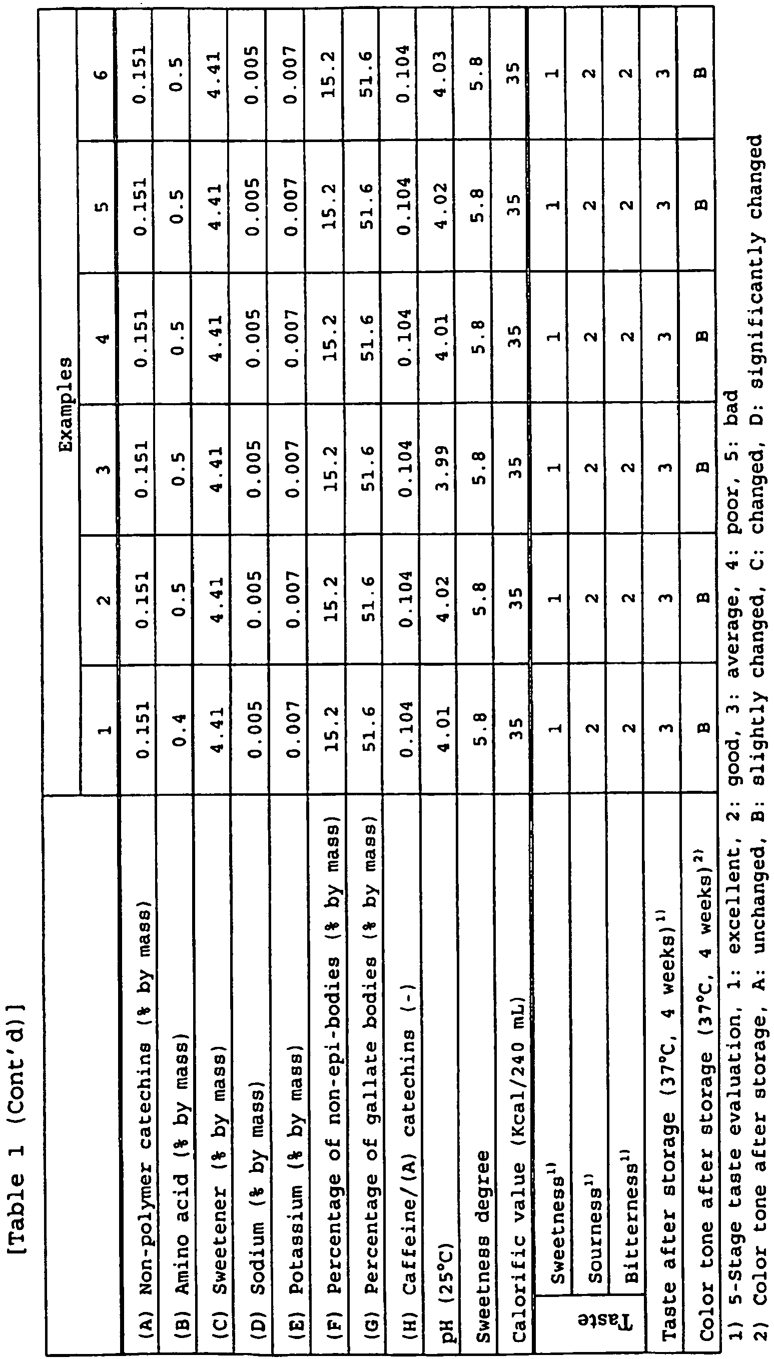

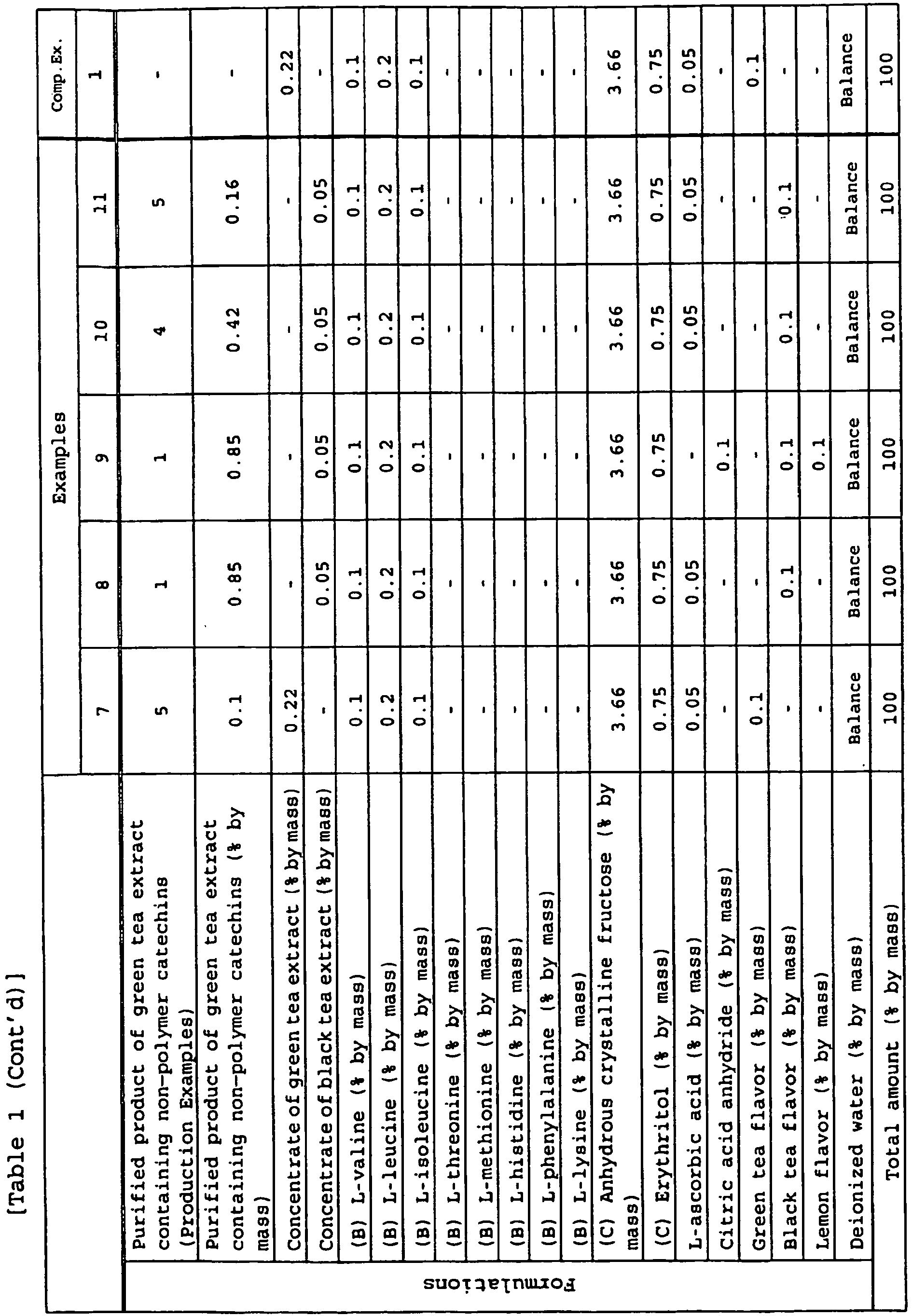

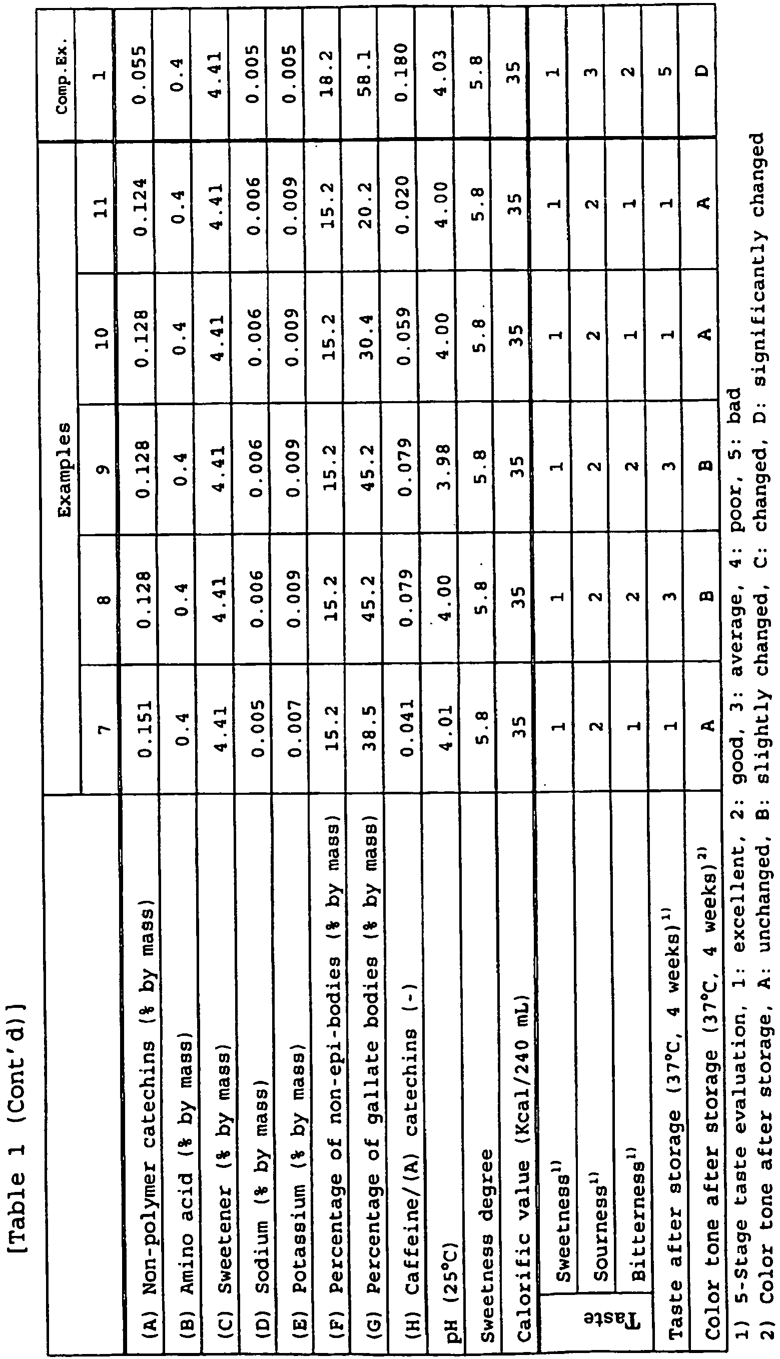

### Example 12

The "purified product 1 of green tea extract containing non-polymer catechins" (8.5 g), L-valine (1.0 g), L-leucine (2.0 g) and L-isoleucine (1.0 g) were dissolved in water. Anhydrous crystalline fructose, erythritol, citric acid anhydride, trisodium citrate, L-ascorbic acid and a lemon lime flavor were then added, and the total amount was brought to 1,000 g. Subsequent to mixing, the beverage was subjected to UHT sterilization and was then filled in a PET bottle.
The composition of the packaged non-tea beverage and the results of its taste evaluation and stability are shown in Table 2.

### Examples 13-17

Packaged non-tea beverages were produced in a similar manner as in Example 12 except that amino acids were mixed as in Examples 2-6, respectively. Their compositions and the results of their taste evaluations and stability are shown in Table 2.

### Comparative Example 2

A packaged non-tea beverage was produced in a similar manner as in Example 9 except that the "purified product 1 of green tea extract containing non-polymer catechins" and the concentrate of black tea extract were not used. Its composition and the results of its taste evaluation and stability are shown in Table 2.

### Comparative Example 3

A packaged non-tea beverage was produced in a similar manner as in Example 12 except that the mixed amount of citric acid anhydride was increased and sodium citrate was not used. Its composition and the results of its taste evaluation and stability are shown in Table 2.

### Comparative Example 4

A packaged non-tea beverage was produced in a similar manner as in Example 12 except that the mixed amount of sodium citrate was increased. Its composition and the results of its taste evaluation and stability are shown in Table 2.

### Comparative Example 5

A packaged non-tea beverage was produced in a similar manner as in Example 12 except that the "concentrate 2 of green tea extract containing non-polymer catechins" was used in place of the "purified product 1 of green tea extract containing non-polymer catechins". Its composition and the results of its taste evaluation and stability are shown in Table 2.

A commercial sports drink is shown in Table 2.

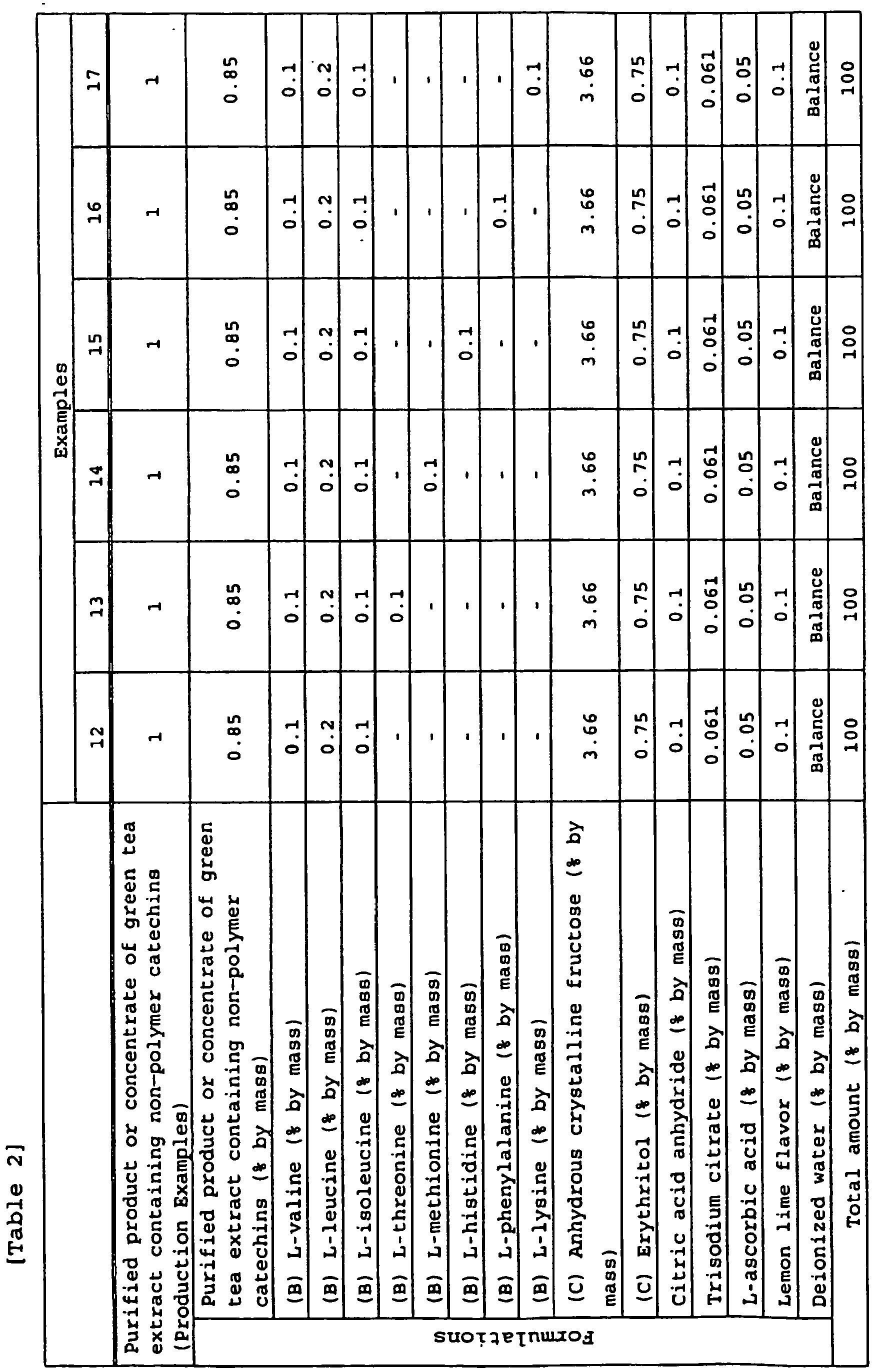

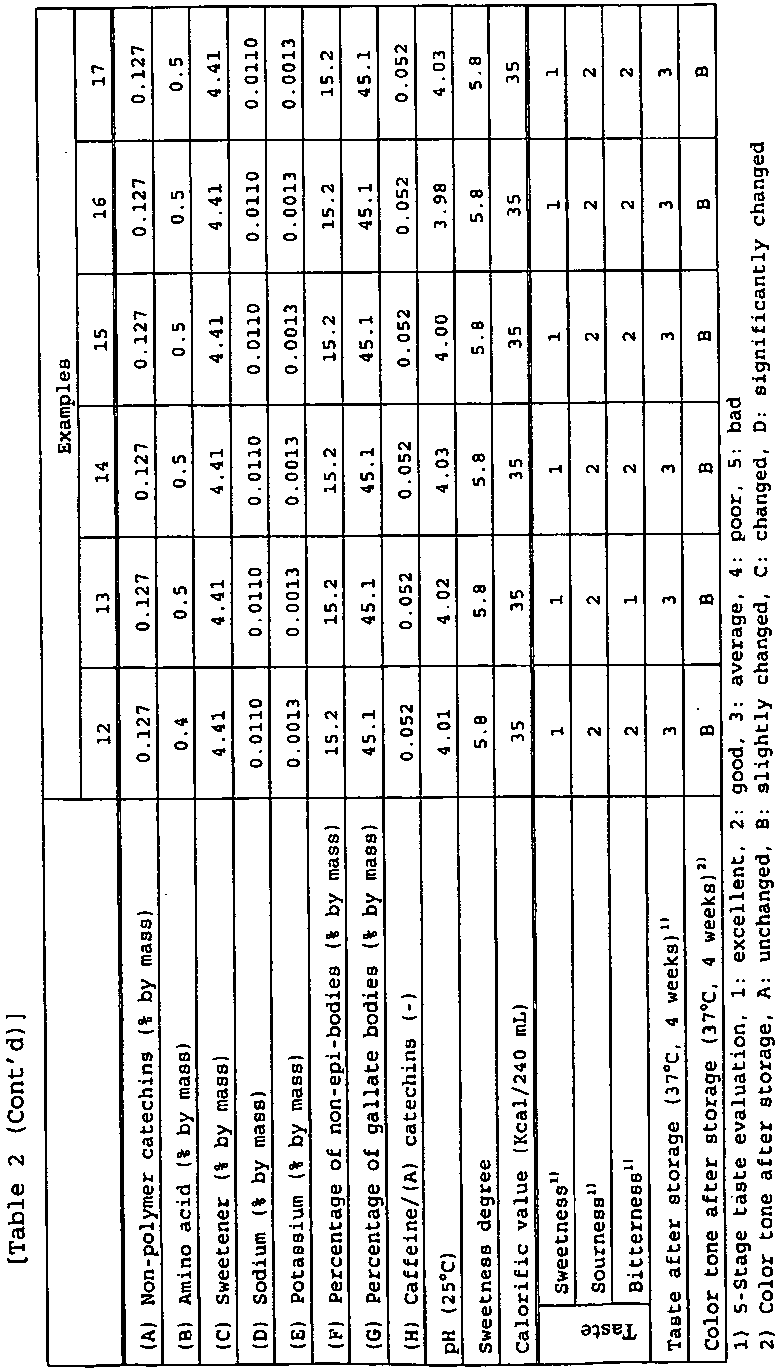

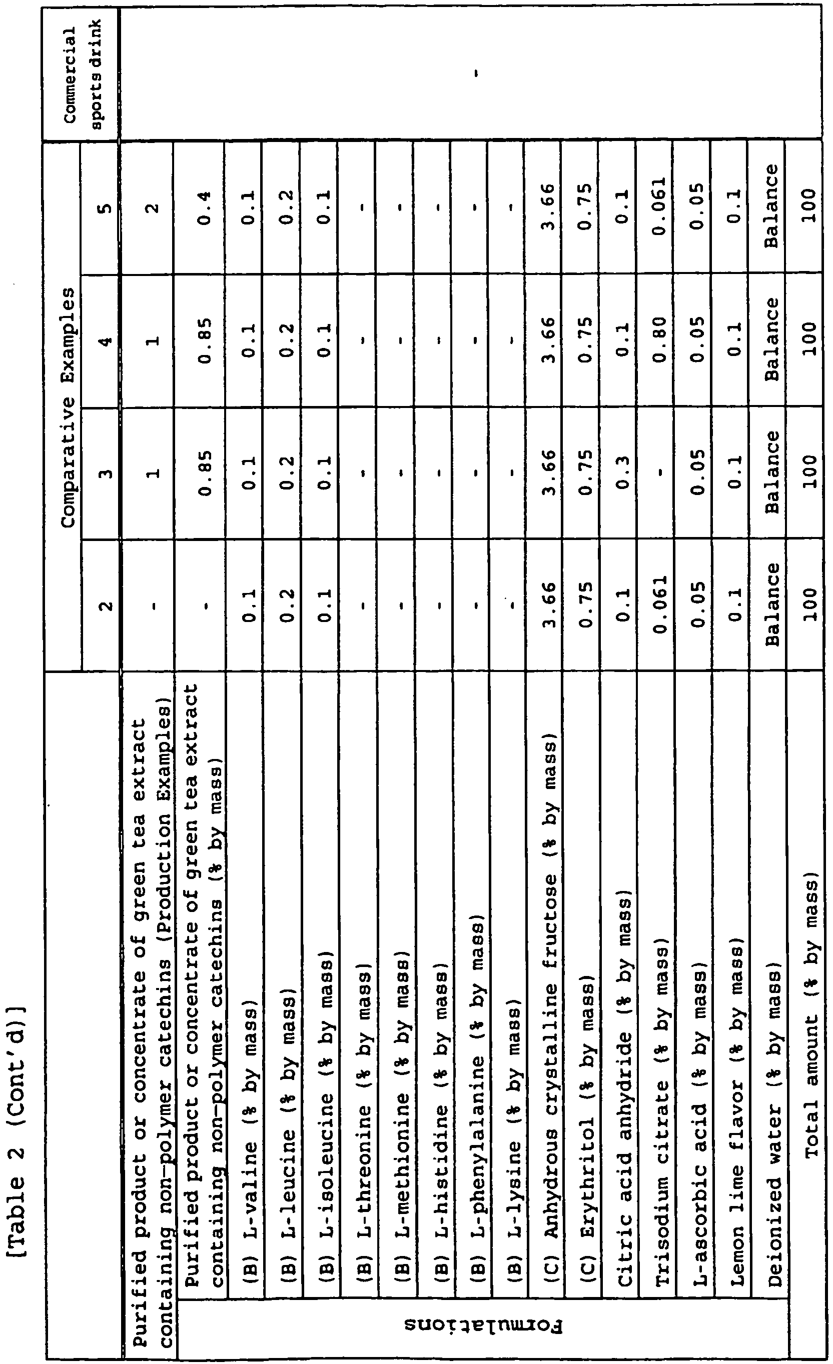

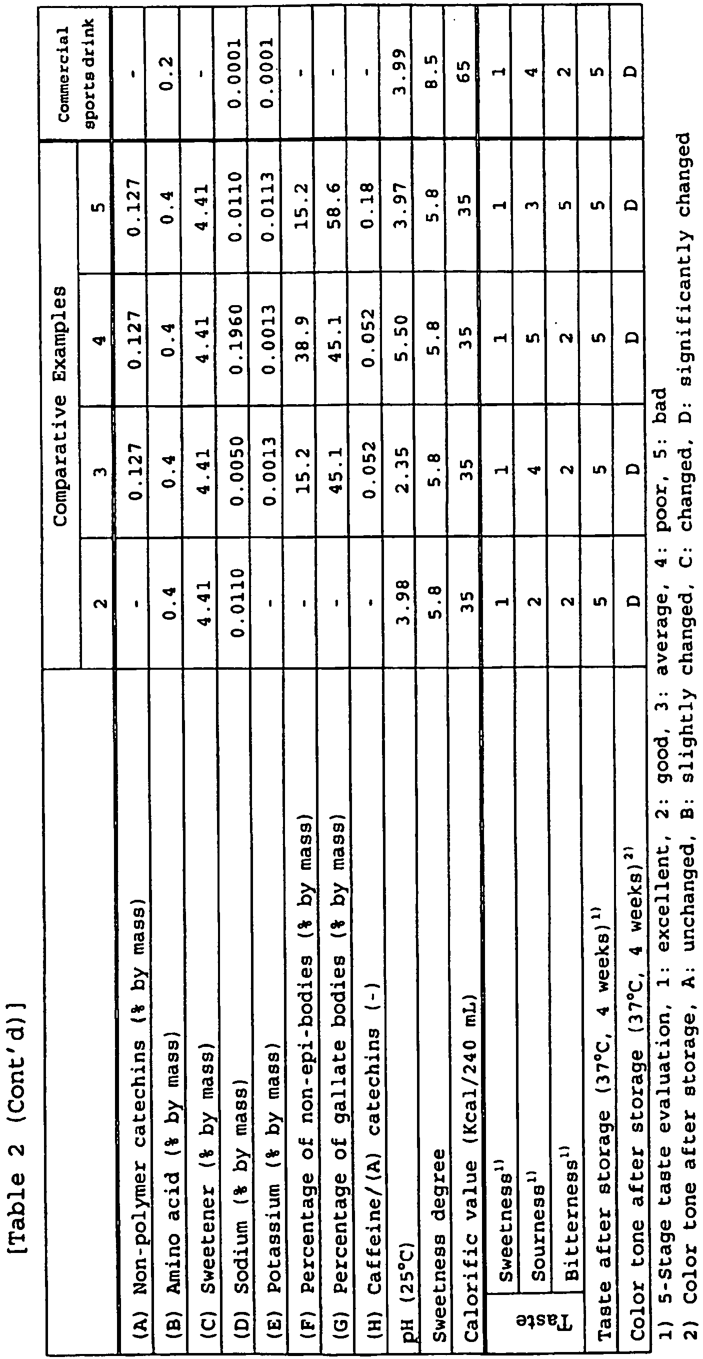

It is evident from Table 1 and Table 2 that the packaged beverages according to the present invention remained unchanged in taste and permitted long-term storage despite the inclusion of the sweetener.

### Example 21

The "purified product 1 of green tea extract containing non-polymer catechins" (5.3 g), the "concentrate 2 of green tea extract containing non-polymer catechins" (2.2 g), sodium L-glutamate (1.0 g) and sodium L-aspartate (1.0 g) were dissolved in water. Anhydrous crystalline fructose, erythritol, sodium L-ascorbate and a green tea flavor were then added, and the total amount was brought to 1,000 g. Subsequent to mixing, the beverage was subjected to UHT sterilization and was then filled in a PET bottle. The composition of the packaged green tea beverage and the results of its taste evaluation and stability are shown in Table 3.

### Example 22

A packaged green tea beverage was produced in a similar manner as in Example 21 except that L-glutamic acid and L-aspartic acid were used as amino acids in place of sodium L-glutamate and sodium L-aspartate. Its composition and the results of its taste evaluation and stability are shown in Table 3.

### Example 23

A packaged green tea beverage was produced in a similar manner as in Example 21 except that the "purified product 5 of green tea extract containing non-polymer catechins" was used in place of the "purified product 1 of green tea extract containing non-polymer catechins". Its composition and the results of its taste evaluation and stability are shown in Table 3.

### Example 24

A packaged black tea beverage was produced in a similar manner as in Example 21 except that the used amount of the "purified product 1 of green tea extract containing non-polymer catechins" was changed to 8.5 g and a powder of black tea extract (0.5 g, product of India) was used in place of the "concentrate 2 of green tea extract containing non-polymer catechins". Its composition and the results of its taste evaluation and stability are shown in Table 3.

### Example 25

A packaged black tea beverage was produced in a similar manner as in Example 24 except that citric acid anhydride (1 g) was mixed in place of sodium L-ascorbate and a lemon flavor (1 g) was added further. Its composition and the results of its taste evaluation and stability are shown in Table 3.

### Example 26

A packaged black tea beverage was produced in a similar manner as in Example 24 except that the "purified product 4 of green tea extract containing non-polymer catechins" was used in place of the "purified product 1 of green tea extract containing non-polymer catechins". Its composition and the results of its taste evaluation and stability are shown in Table 3.

### Example 27

A packaged black tea beverage was produced in a similar manner as in Example 24 except that the "purified product 5 of green tea extract containing non-polymer catechins" was used in place of the "purified product 1 of green tea extract containing non-polymer catechins". Its composition and the results of its taste evaluation and stability are shown in Table 3.

### Comparative Example 11

A packaged beverage was produced in a similar manner as in Example 21 except that the "purified product of green tea extract containing non-polymer catechins" was not used. Its composition and the results of its taste evaluation and stability are shown in Table 3.

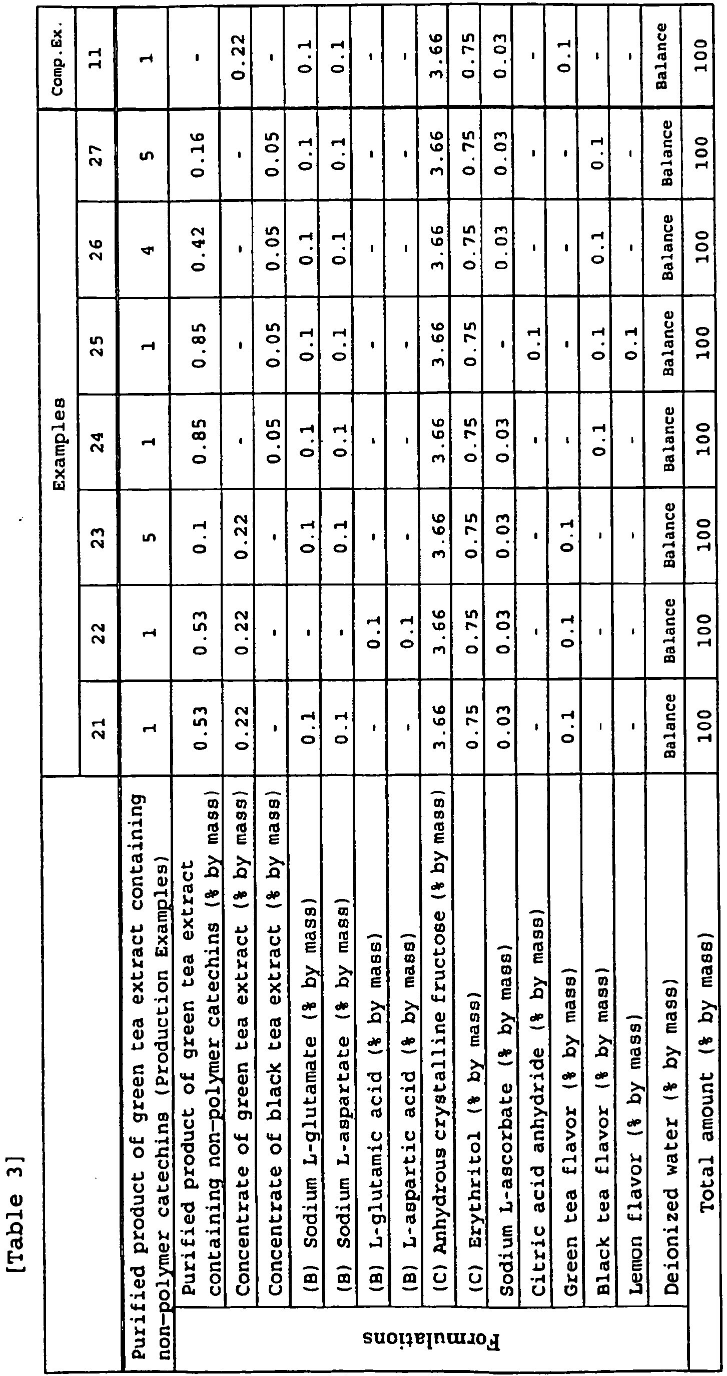

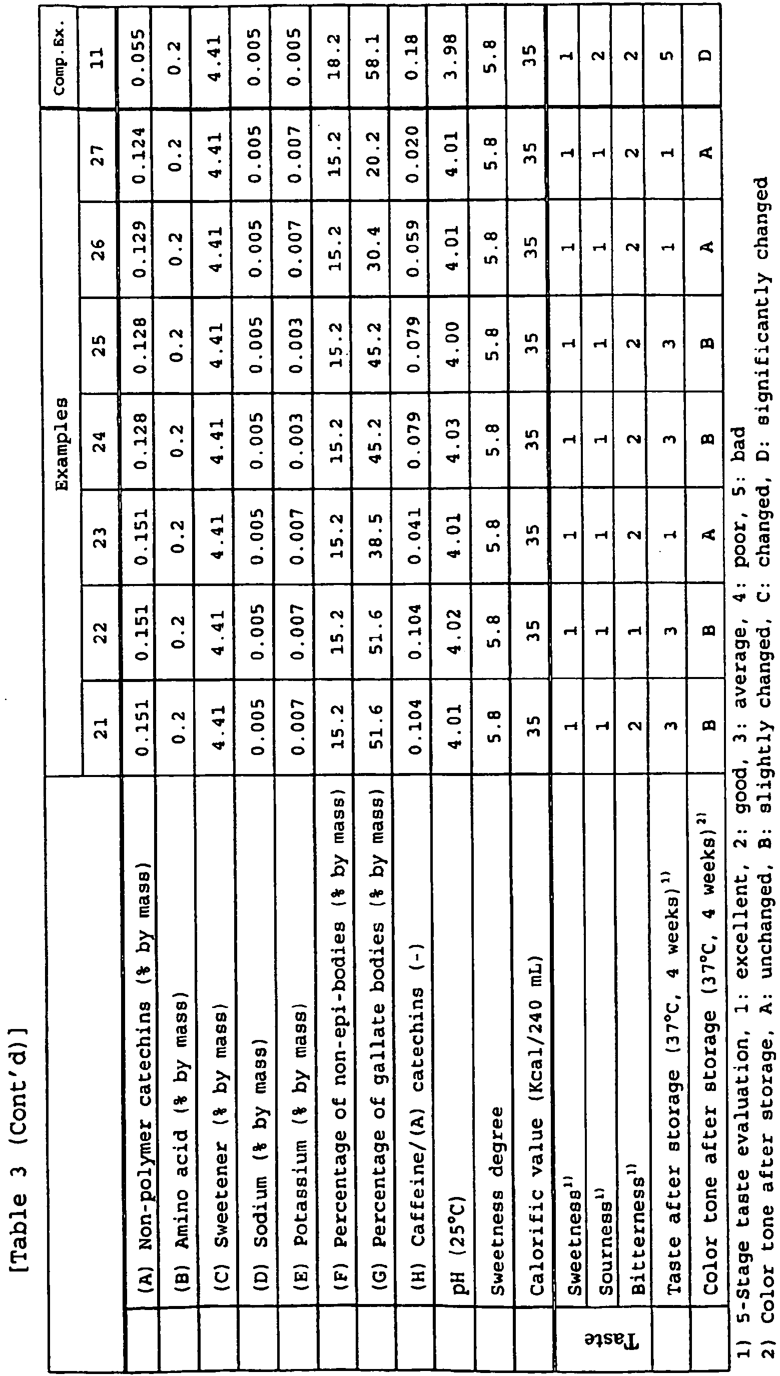

### Example 28

The "purified product 1 of green tea extract containing non-polymer catechins" (8.5 g), L-arginine (1.0 g) and glycine (0.5 g) were dissolved in water. Anhydrous crystalline fructose, erythritol, citric acid anhydride, trisodium citrate, L-ascorbic acid and a lemon lime flavor were then added, and the total amount was brought to 1,000 g. Subsequent to mixing, the beverage was subjected to UHT sterilization and was then filled in a PET bottle. The composition of the packaged non-tea beverage and the results of its taste evaluation and stability are shown in Table 4.

### Examples 29-35

Packaged non-tea beverages were produced in a similar manner as in Example 28 except that various amino acids were mixed in place of glycine, respectively. Their compositions and the results of their taste evaluations and stability are shown in Table 4.

### Comparative Example 12

A packaged non-tea beverage was produced in a similar manner as in Example 28 except that the "purified product of green tea extract containing non-polymer catechins" was not used. Its composition and the results of its taste evaluation and stability are shown in Table 4.

### Comparative Example 13

A packaged non-tea beverage was produced in a similar manner as in Example 28 except that the mixed amount of citric acid anhydride was increased and sodium citrate was not used. Its composition and the results of its taste evaluation and stability are shown in Table 4.

### Comparative Example 14

A packaged non-tea beverage was produced in a similar manner as in Example 28 except that the mixed amount of sodium citrate was increased. Its composition and the results of its taste evaluation and stability are shown in Table 4.

### Comparative Example 15

A packaged non-tea beverage was produced in a similar manner as in Example 28 except that the "purified product 2 of green tea extract containing non-polymer catechins" was used in place of the "purified product 1 of green tea extract containing non-polymer catechins". Its composition and the results of its taste evaluation and stability are shown in Table 4.

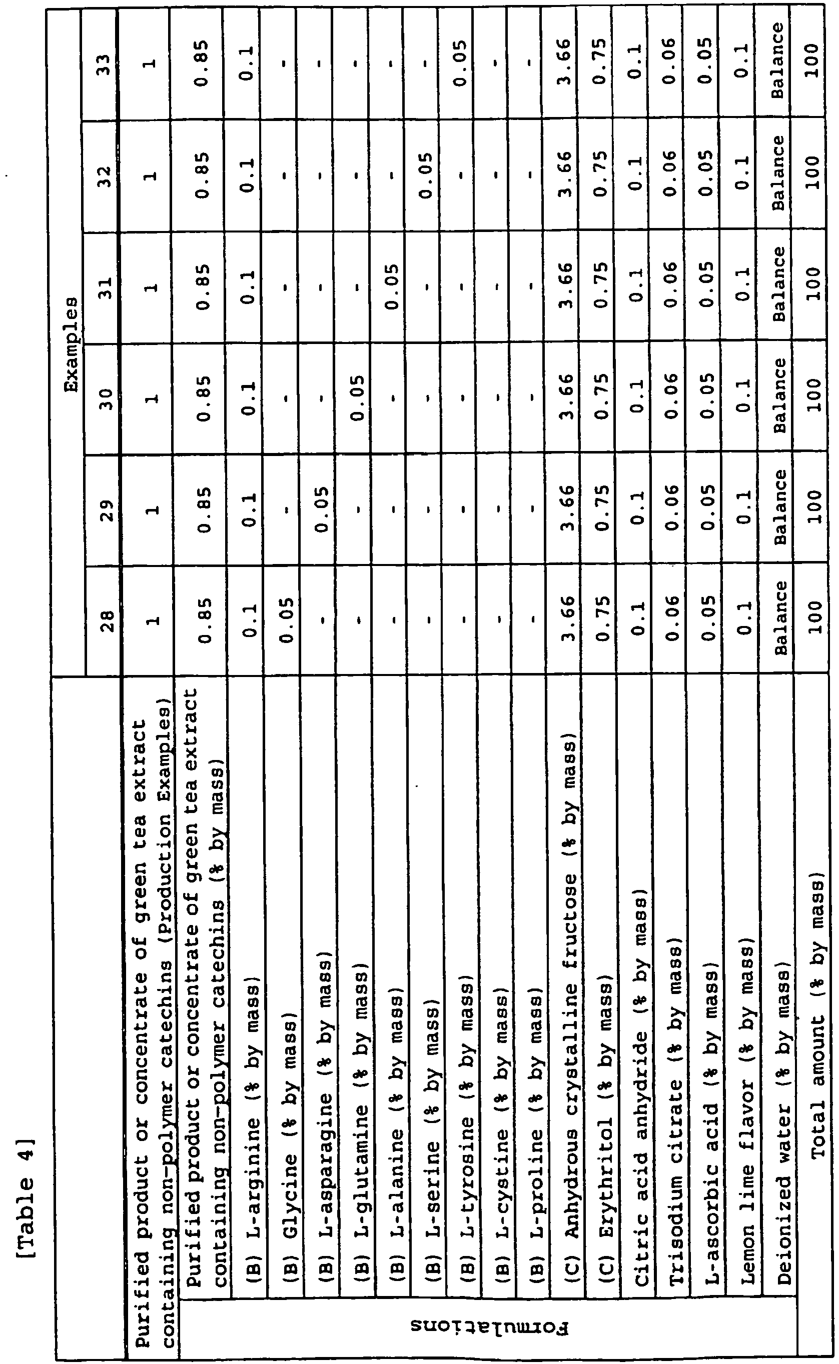

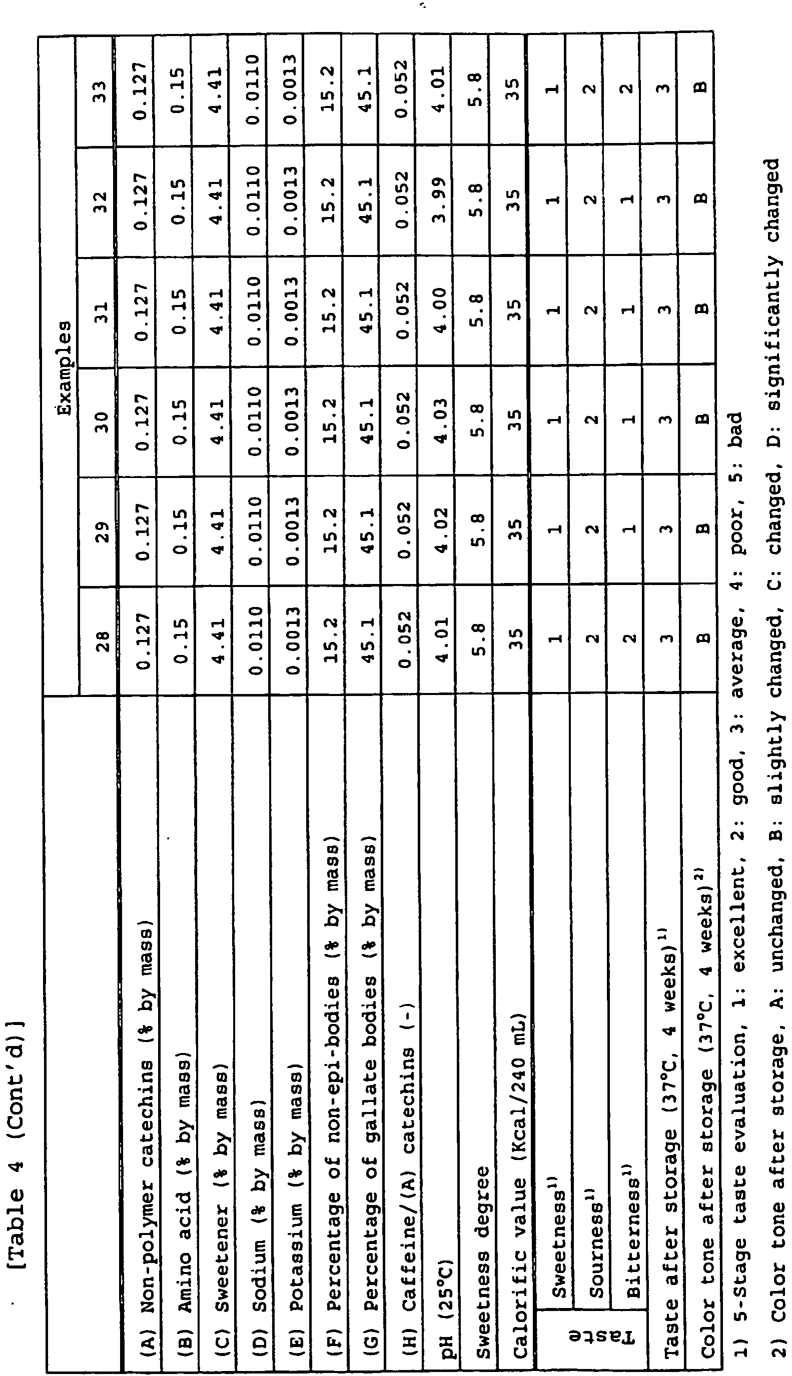

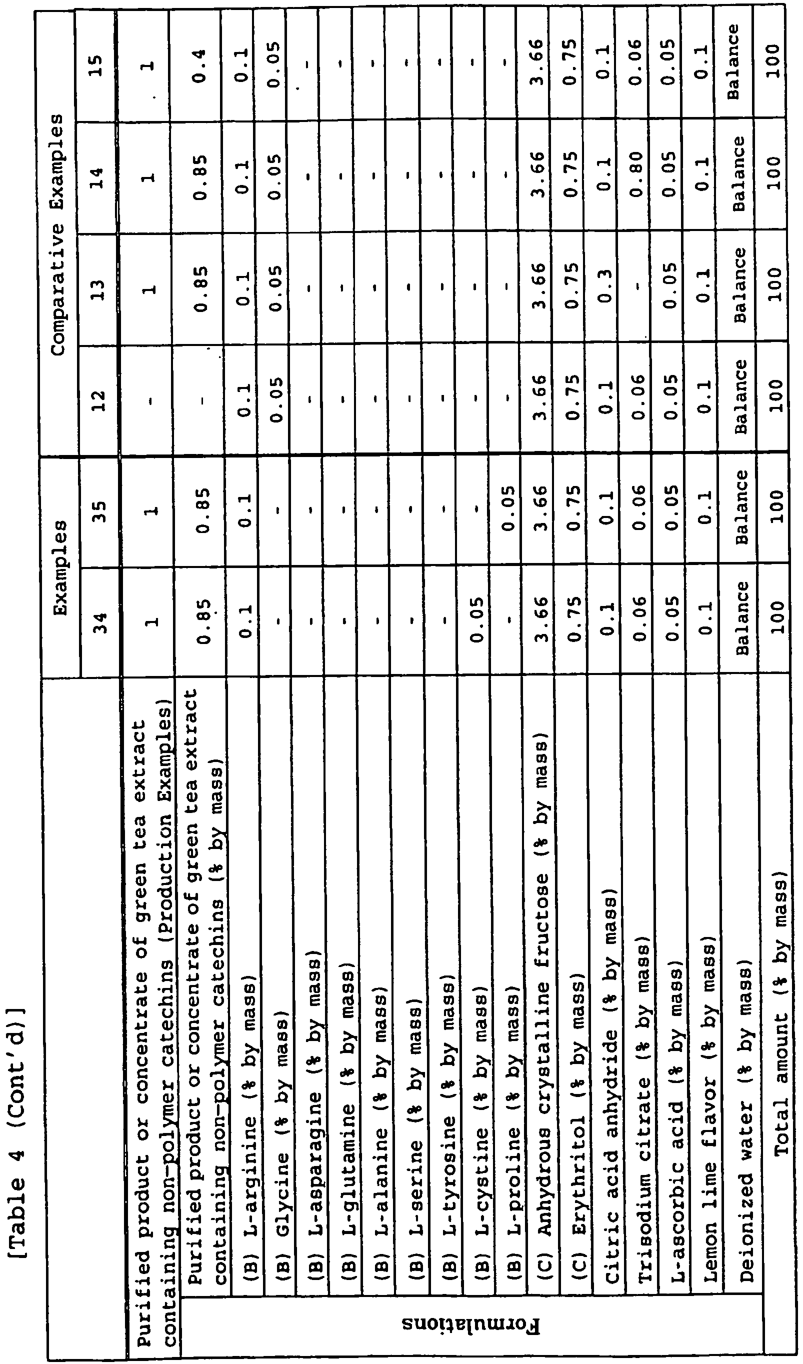

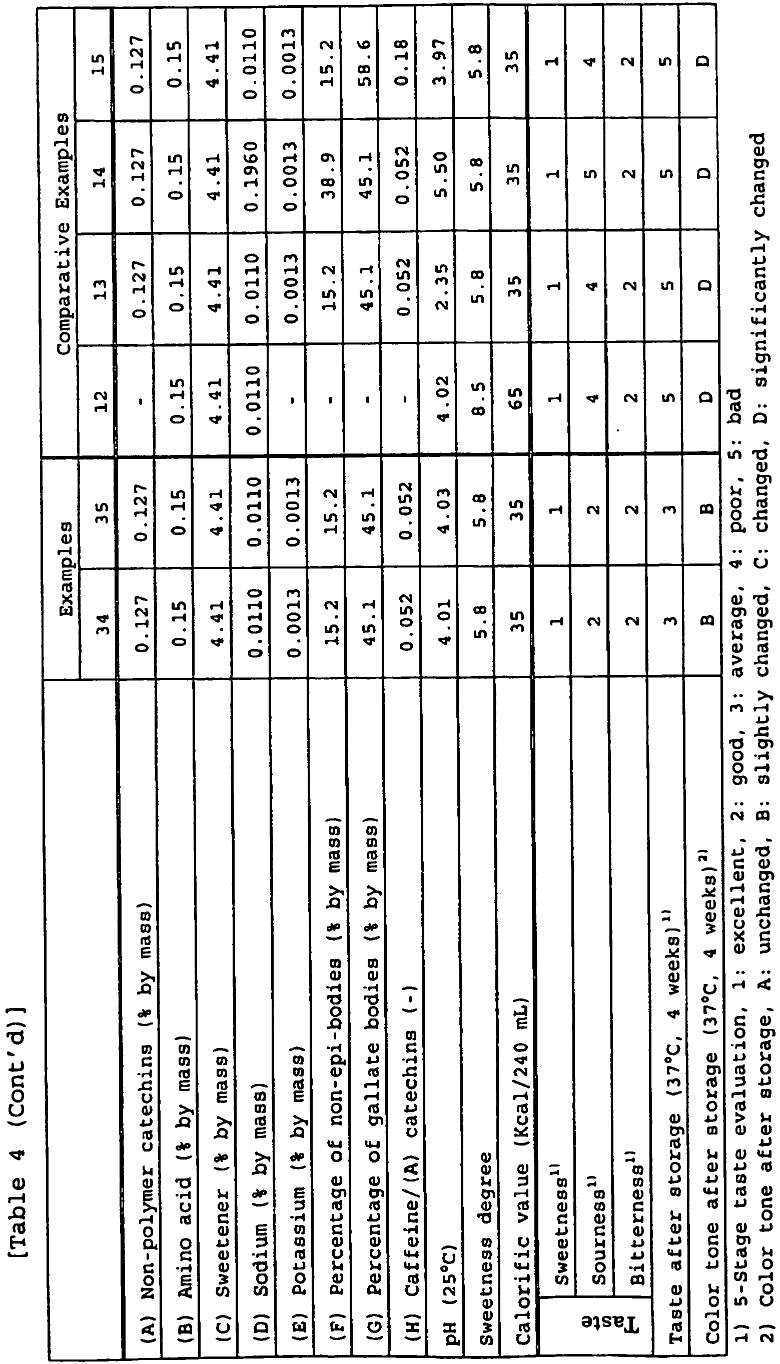

It is evident from Table 3 and Table 4 that the packaged beverages according to the present invention remained unchanged in taste and permitted long-term storage.

## Claims

1. A packaged beverage, comprising:
(A) from 0.06 to 0.5 % by mass of non-polymer catechins;
(B) from 0.1 to 5.0 % by mass of at least one amino acid selected from L-isoleucine, L-leucine, L-valine, L-threonine, DL-methionine, L-methionine, L-histidine, L-phenylalaine, L-lysine, L-tryptophan, L-aspartic acid, L-glutamic acid, L-alanine, DL-alanine, glycine, L-asparagine, L-glutamine, L-arginine, L-serine, L-tyrosine, L-cystine and L-proline, or a salt thereof; and (C) from 0.01 to 20 % by mass of a sweetener which comprises at least one sweetener selected from fructose, glucose, sucrose, glucofructose syrup and fructoglucose syrup, wherein (G) a percentage of gallate bodies in the non-polymer catechins is from 5 to 55 % by mass, and pH is from 2.5 to 5.1.

2. The packaged beverage according to claim 1, wherein a purified product of green tea extract is mixed.

3. The packaged beverage according to claim 1 or 2, further comprising (D) from 0.001 to 0.5 % by mass of sodium and/or (E) from 0.001 to 0.2 % by mass of potassium.

4. The packaged beverage according to any one of claims 1-3, wherein (F) a percentage of non-epi-forms in the non-polymer catechins is from 5 to 25 % by mass.

5. The packaged beverage according to any one of claims 1-4, wherein a content weight ratio [ (H) / (A) ] of caffeine (H) to the non-polymer catechins (A) is from 0.0001 to 0.16.

6. The packaged beverage according to any one of claims 1-5, which comprises as sweetener a sugar alcohol.

7. The packaged beverage according to any one of claims 1-6, which comprises as sweetener an artificial sweetener.

8. The packaged beverage according to any one of claims 1-7, further comprising at least one sour seasoning selected from ascorbic acid, citric acid, gluconic acid, succinic acid, tartaric acid, lactic acid, fumaric acid, malic acid, and salts thereof.

9. The packaged beverage according to any one of 6 claims 1-8, further comprising at least one vitamin B selected from inositol, thiamine hydrochloride, thiamine nitrate, riboflavin, riboflavin 5'-phosphate sodium, niacin, nicotinamide, calcium pantothenate, pyridoxy hydrochloride, cyanocobalamin, folic acid, and biotin.

10. The packaged beverage according to any one of claims 1-9, which has a sweetness degree of at least 2 when sucrose is assumed to have a sweetness degree of 1.

11. The packaged beverage according to any one of claims 1-10, which is a non-tea beverage.

12. The packaged beverage according to any one of claims 1-10, which is a non-fermented tea beverage.

13. The packaged beverage according to any one of claims 1-10, which is a semi-fermented tea beverage.

14. The packaged beverage according to any one of claims 1-10, which is a fermented tea beverage.

15. The packaged beverage according to any one of claims 1-14, which is a non-carbonated beverage.

16. The packaged beverage according to any one of claims 1-14, which is a carbonated beverage.

17. The packaged beverage according to any one of claims 1-16, which has a calorific value of not greater than 40 Kcal/240 mL.

## Patentansprüche

1. Verpacktes Getränk, umfassend:
(A) 0,06 bis 0,5 Massen% nicht-polymere Catechine;
(B) 0,1 bis 5,0 Massen% mindestens einer Aminosäure, ausgewählt aus L-Isoleucin, L-Leucin, L-Valin, L-Threonin, DL-Methionin, L-Methionin, L-Histidin, L-Phenylalanin, L-Lysin, L-Tryptophan, L-Asparaginsäure, L-Glutaminsäure, L-Alanin, DL-Alanin, Glycin, L-Asparagin, L-Glutamin, L-Arginin, L-Serin, L-Tyrosin, L-Cystin und L-Prolin oder Salze davon; und
(C) 0,01 bis 20 Massen% eines Süßmittels, das mindestens ein Süßmittel ausgewählt aus Fructose, Glucose, Saccharose, Glucofructosesirup und Fructoglucosesirup umfasst,
worin (G) ein Prozentwert der Gallat-Körper in den nicht-polymeren Catechinen 5 bis 55 Massen% ist, und der pH-Wert von 2,5 bis 5,1 ist.

2. Verpacktes Getränk gemäß Anspruch 1, worin ein gereinigtes Produkt aus Grünteeextrakt gemischt wird.

3. Verpacktes Getränk gemäß Anspruch 1 oder 2, das weiterhin (D) von 0,001 bis 0,5 Massen% Natrium und/oder (E) von 0,001 bis 0,2 Massen% Kalium umfasst.

4. Verpacktes Getränk gemäß irgendeinem der Ansprüche 1 bis 3, worin (F) ein Prozentwert der nicht-Epi-Formen in den nicht-polymeren Catechinen von 5 bis 25 Massen% ist.

5. Verpacktes Getränk gemäß irgendeinem der Ansprüche 1 bis 4, worin ein Inhalts-Gewichtsverhältnis ([(H)/(A)] von Koffein (H) zu den nicht-polymeren Catechinen (A) von 0,0001 bis 0,16 ist.

6. Verpacktes Getränk gemäß irgendeinem der Ansprüche 1 bis 5, das als Süßmittel einen Zuckeralkohol umfasst.

7. Verpacktes Getränk gemäß irgendeinem der Ansprüche 1 bis 6, das als Süßmittel einen künstlichen Süßstoff umfasst.

8. Verpacktes Getränk gemäß irgendeinem der Ansprüche 1 bis 7, das weiterhin mindestens einen sauren Geschmacksstoff, ausgewählt aus Ascorbinsäure, Zitronensäure, Gluconsäure, Bernsteinsäure, Weinsäure, Milchsäure, Fumarsäure, Maleinsäure und Salzen davon umfasst.

9. Verpacktes Getränk gemäß irgendeinem der Ansprüche 1 bis 8, das weiterhin mindestens einen Vitamin B ausgewählt aus Inositol, Thiaminhydrochlorid, Thiaminnitrat, Riboflavin, Fiboflavin 5'-Phosphat-Natrium, Niacin, Nicotinamid, Calciumpantothenat, Pyridoxyhydrochlorid, Cyanocobalamin, Folsäure und Biotin umfasst.

10. Verpacktes Getränk gemäß irgendeinem der Ansprüche 1 bis 9, das einen Süß-Grad von mindestens 2 hat, wenn von Saccharose ein Süß-Grad von 1 angenommen wird.

11. Verpacktes Getränk gemäß irgendeinem der Ansprüche 1 bis 10, das ein Nicht-Tee-Getränkt ist.

12. Verpacktes Getränk gemäß irgendeinem der Ansprüche 1 bis 10, das ein nicht-fermentiertes Teegetränk ist.

13. Verpacktes Getränk gemäß irgendeinem der Ansprüche 1 bis 10, das ein semi-fermentiertes Teegetränk ist.

14. Verpacktes Getränk gemäß irgendeinem der Ansprüche 1 bis 10, das ein fermentiertes Teegetränkt ist.

15. Verpacktes Getränk gemäß irgendeinem der Ansprüche 1 bis 14, das ein nicht-kohlensäurehaltiges Getränk ist.

16. Verpacktes Getränk gemäß irgendeinem der Ansprüche 1 bis 14, das ein kohlensäurehaltiges Getränk ist.

17. Verpacktes Getränk gemäß irgendeinem der Ansprüche 1 bis 16, das einen Brennwert von nicht mehr als 40 Kcal/240 ml hat.

## Revendications

1. Boisson conditionnée, comprenant :
(A) de 0,06 à 0,5 % en masse de catéchines non polymères ;
(B) de 0,1 à 5,0 % en masse d'au moins un acide aminé choisi parmi L-isoleucine, L-leucine, L-valine, L-thréonine, DL-méthionine, L-méthionine L-histidine, L-phénylalanine, L-lysine, L-tryptophane, acide L-aspartique, acide L-glutamique, L-alanine, DL-alanine, glycine, L-asparagine, L-glutamine, L-arginine, L-sérine, L-tyrosine, L-cystine et L-proline, ou un sel de celles-ci ; et
(C) de 0,01 à 20 % en masse d'un édulcorant qui comprend au moins un édulcorant choisi parmi fructose, glucose, sucrose, sirop de gluco-fructose et sirop de fructoglucose dans lequel (G) un pourcentage de corps de gallate dans les catéchines non polymères est compris entre 5 et 55 % en masse, et le pH est compris entre 2,5 et 5,1.

2. Boisson conditionnée selon la revendication 1, dans laquelle un produit purifié d'extrait de thé vert est mélangé.

3. Boisson conditionnée selon la revendication 1 ou 2, comprenant en outre (D) de 0,001 à 0,5 % en masse de sodium et/ou (E) de 0,001 à 0,2 % en masse de potassium.

4. Boisson conditionnée selon l'une quelconque des revendications 1 à 3, dans laquelle (F) un pourcentage de formes non-épi dans les catéchines non polymères est compris entre 5 et 25 % en masse.

5. Boisson conditionnée selon l'une quelconque des revendications 1 à 4, dans laquelle un rapport en poids du contenu [(H)/(A)] de caféine (H) sur les catéchines non polymères (A) est compris entre 0,0001 et 0,16.

6. Boisson conditionnée selon l'une quelconque des revendications 1 à 5, qui comprend comme édulcorant un alcool de sucre.

7. Boisson conditionnée selon l'une quelconque des revendications 1 à 6, qui comprend comme édulcorant un édulcorant artificiel.

8. Boisson conditionnée selon l'une quelconque des revendications 1 à 7, comprenant en outre au moins un assaisonnement aigre choisi parmi l'acide ascorbique, l'acide citrique, l'acide gluconique, l'acide succinique, l'acide tartrique, l'acide lactique, l'acide fumarique, l'acide malique, et sels de ceux-ci.

9. Boisson conditionnée selon l'une quelconque des revendications 1 à 8, comprenant en outre au moins une vitamine B choisie parmi inositol, chlorhydrate de thiamine, nitrate de thiamine, riboflavine, riboflavine 5 phosphate de sodium, niacine, nicotinamide, pantothénate de calcium, chlorhydrate de pyridoxy, cyanocobalamine, acide folique et biotine.

10. Boisson conditionnée selon l'une quelconque des revendications 1 à 9, qui a un degré de sucrosité d'au moins 2 lorsque le sucrose est censé avoir un degré de sucrosité de 1.

11. Boisson conditionnée selon l'une quelconque des revendications 1 à 10, qui est une boisson autre que le thé.

12. Boisson conditionnée selon l'une quelconque des revendications 1 à 10, qui est une boisson de thé non fermentée.

13. Boisson conditionnée selon l'une quelconque des revendications 1 à 10, qui est une boisson de thé semi-fermentée.

14. Boisson conditionnée selon l'une quelconque des revendications 1 à 10, qui est une boisson de thé fermentée.

15. Boisson conditionnée selon l'une quelconque des revendications 1 à 14, qui est une boisson non gazéifiée.

16. Boisson conditionnée selon l'une quelconque des revendications 1 à 14, qui est une boisson gazéifiée.

17. Boisson conditionnée selon l'une quelconque des revendications 1 à 16, qui a une valeur calorique non supérieure à 40 Kcal/240 mL.
